# EUROPÄISCHE PATENTSCHRIFT

(11) **EP 3 388 324 B1**
(45) Veröffentlichungstag und Bekanntmachung des Hinweises auf die Patenterteilung: **24.05.2023**
(21) Anmeldenummer: 18000255.2
(22) Anmeldetag: 14.03.2018
(51) Int. Cl.: B62M 9/125, B60B 27/02, B62K 25/02, B62M 9/126, B62M 9/1242, B62M 9/16

(54) **HINTERES SCHALTWERK ZUR KOAXIALEN MONTAGE**
REAR DERAILLEUR FOR COAXIAL MOUNTING
DERAILLEUR ARRIÈRE DESTINÉ AU MONTAGE COAXIAL

(30) Priorität: 20.03.2017 DE 102017002629; 16.02.2018 DE 102018001253
(43) Veröffentlichungstag der Anmeldung: 17.10.2018
(60) Teilanmeldung: 23020162.6
(73) Patentinhaber: SRAM Deutschland GmbH, 97424 Schweinfurt (DE)
(72) Erfinder: Braedt, Henrik, 97456 Dittelbrunn/OT Hambach (DE)

(56) Entgegenhaltungen:
- EP-A1- 0 655 386
- EP-A2- 1 428 746
- EP-A2- 2 210 805
- US-A1- 2016 039 494

## Beschreibung

Die Erfindung betrifft ein hinteres Schaltwerk zur koaxialen Montage an einer Hinterradachse.

Üblicherweise werden hintere Schaltwerke am rechten Ausfallende des Rahmens mit Hilfe eines Schaltauges befestigt. Das Schaltauge wird dazu an seinem einen Ende koaxial mit der Hinterradachse am Rahmen festgelegt und an seinem anderen Ende mit dem Basiselement (auch B-Knuckle) des Schaltwerks verbunden. Das Basiselement ist relativ zum Schaltauge um die B-Achse drehbar. Schaltaugen unterscheiden sich je nach Hersteller und Anbringungsart stark voneinander. Sie können einteilig mit dem Rahmen ausgebildet sein oder als separates Bauteil vorliegen. Separate Schaltaugen werden entweder über Schnellspannachsen oder über Steckachsen am Rahmen geklemmt. Sowohl die Klemmung auf der Rahmenaußenseite, als auch auf der Rahmeninnenseite ist möglich. Das führt dazu, dass das Schaltwerk je nach verwendetem Schaltauge eine andere Position relativ zur Hinterradachse und auch zum Ritzelpaket einnimmt. Diese Positionsunterschiede in axialer als auch in radialer Richtung machen die Schaltwerksauslegung und dessen Montage kompliziert. Das Schaltwerk muss je nach Schaltauge neu eingestellt werden. Durch das zusätzliche Bauteil kommen Toleranzen hinzu, die sich negativ auf die Positionierungsgenauigkeit des Schaltwerks auswirken.

Außerdem sind Schaltaugen, gerade als separate Bauteile, schadensanfällig und oftmals instabil. Bei großen Ritzelpaketen und entsprechend großen Schaltwerksdimensionen treten erhöhte Hebelkräfte auf, die von einem austauschbaren Schaltauge nur ungenügend aufgenommen werden können. Darüber hinaus wirken sich die vergrößerten Schaltwerksdimensionen mit den verlängerten Hebelverhältnissen zusätzlich negativ auf die Positionierungsgenauigkeit des Schaltwerks aus. Im Konflikt dazu steht, dass gerade eine erhöhte Anzahl von eng nebeneinander angeordneten Ritzeln eine erhöhte Positionierungsgenauigkeit verlangt.

Das Hinterrad umfasst unter anderem eine Hinterradnabe mit einer hohlen Nabenachse (auch Hohlachse genannt). Zur Befestigung des Hinterrads am Rahmen wird eine separate Steckachse oder Schnellspannerachse durch die Nabenachse der Hinterradnabe geführt und mit dem Rahmen verspannt.

Die geschilderten Probleme werden zum Teil von bereits bekannten Schaltwerken zur koaxialen Montage an der Hinterradachse gelöst. Beispielsweise beschreiben die EP 0 875 444 A1, die EP 1 342 658 A1 und die EP 1 764 297 A1 solche Schaltwerke, bei denen das separate Schaltauge entfällt. Die Drehachse des Basiselements verläuft entlang der Hinterradachse, ist also mit dieser koaxial. US 2016/039494 A1 offenbart die Merkmale des Oberbegriffs des Anspruchs 1. Üblicherweise umfassen die bekannten Schaltwerke ein Basiselement mit einem Befestigungsende mit einer Öffnung zur Aufnahme einer Achse. Das Befestigungsende wird ähnlich wie ein Schaltauge entweder außen oder innen am Rahmen befestigt. Dazu wird es am Rahmen kraftschlüssig mittels Steckachse oder Schnellspannachse geklemmt. Diese bekannten koaxialen Ausführungen weisen jedoch Mängel auf.

Zum einen die mangelnde Stabilität der Anordnung. Moderne Ritzelpakete umfassen eine immer weiter steigende Anzahl von elf oder mehr Ritzeln. Um diese mit dem Schaltwerk bedienen zu können, wird die Schaltwerksdimension erhöht. Damit einhergehend steigen auch die auf das Schaltwerk wirkenden Hebelkräfte, so dass das Schaltwerk zum Verkippen gegenüber den Rotationsebenen der Ritzel neigt. Nur ein exakt vertikal unter dem Ritzelpaket stehendes Schaltwerk lässt sich präzise schalten.

Zum anderen die Abhängigkeit von Rahmentoleranzen. Da herkömmliche Schaltwerke direkt am Rahmen befestigt und gegenüber diesem referenziert sind, wirken sich Fertigungstoleranzen des Rahmens auch direkt auf das Schaltwerk aus. Darunter leidet die Positionierungsgenauigkeit und Einstellbarkeit des Schaltwerks. Des Weiteren sind die bekannten koaxial montierten Schaltwerke anfällig für Fehlschaltungen. Aufgrund ihres schräggestellten Schwenkmechanismus (Schrägparallelogramm) können Schläge in vertikaler Richtung, wie sie beim Fahren im Gelände auftreten, zu einer Bewegung des Schwenkmechanismus und damit zu ungewollten Schaltvorgängen (ghost shifting) führen. Gerade für die Verwendung mit großen Kassettenspreizungen eignen sich Schrägparallelogramme nur mäßig. Um die sich in ihrer Größe stark unterscheidende Ritzel anfahren zu können, müsste das Schrägparallelogramm noch schräger gestellt werden und/oder die Schaltwerksdimensionen weiter vergrößert werden. Beides würde die Anfälligkeit für ungewollte Schaltvorgänge weiter erhöhen. Ein zusätzliches Problem von Schaltwerken mit Schrägparallelogrammen ist, dass diese nur kompliziert einzustellen sind.

Es stellt sich daher die Aufgabe, ein hinteres Schaltwerk bereitzustellen, das die Nachteile der bekannten Schaltwerke überwindet.

Die folgende Beschreibung der Aspekte und Weiterbildungen sind lediglich Erläuterungen und entsprechen nicht dem Schutzanspruch der allein durch die Ansprüche definiert wird.

Ein erster Aspekt der Erfindung löst die Aufgabe mit einem hinteren Schaltwerk zur koaxialen Montage gemäß Anspruch 1.

Das erfindungsgemäße hintere Schaltwerk ist zur koaxialen Montage an einer Hinterradachse geeignet. Das Schaltwerk weist ein Basiselement (auch B-Knuckle), einen Schwenkmechanismus, ein bewegliches Element (auch P-Knuckle) und eine Kettenführungsanordnung auf. Der Schwenkmechanismus verbindet das Basiselement mit dem beweglichen Element. Die Kettenführungsanordnung ist um eine Drehachse (P-Achse) drehbar mit dem beweglichen Element verbunden. Das Basiselement umfasst ein erstes Anschlussende, welches koaxial zu der Hinterradachse am Fahrradrahmen montierbar ist, und ein zweites Anschlussende zur Kopplung mit dem Schwenkmechanismus. Wobei das erste Anschlussende einen ersten Arm und einen zweiten Arm aufweist, die in axialer Richtung voneinander beabstandet angeordnet sind.

Die beiden Arme dienen der Befestigung des Basiselements an der Hinterradachse. Vorteilhaft bei dieser Ausgestaltung ist, dass die zwei voneinander beabstandeten Arme des Basiselements in montiertem Zustand des Schaltwerks eine stabile Ausrichtung des Schaltwerks parallel zur Rotationsebene der Ritzel und damit senkrecht zur Hinterradachse gewährleisten. Ein Verkippen des Schaltwerks aus dieser Ebene wird auch bei größeren Kräften wirksam verhindert. Die zwei axial beabstandeten Befestigungspunkte des Basiselements an der Hinterradachse können die am Schaltwerk angreifenden Kräfte deutlich besser aufnehmen, als die bekannten Schaltwerke mit nur einem Befestigungsende.

Gemäß dem beanspruchten Schaltwerk befindet sich der erste Arm in montiertem Zustand des Schaltwerks auf einer axialen Innenseite eines Fahrradrahmens und der zweite Arm auf einer axialen Außenseite des Rahmens. Mit montiertem Zustand ist gemeint, dass das hintere Schaltwerk am Rahmen koaxial zur Hinterradachse A montiert ist. Genauer gesagt ist das Schaltwerk am rechten Ausfallende des Rahmens montiert.

Mit Innenseite des Rahmens ist die in Richtung des Ritzelpakets weisende Seite des Rahmens gemeint. Mit der axialen Außenseite ist die, der Innenseite gegenüberliegende, vom Ritzelpaket wegweisende Seite des Rahmens gemeint.

Gemäß dem beanspruchten Schaltwerk weist der erste Arm eine erste Zentrieröffnung und der zweite Arm eine zweite Zentrieröffnung auf.

Gemäß einer Weiterbildung des Schaltwerks weist der erste Arm auf seiner axialen Außenseite eine Adapteranschlagsfläche auf.

Gemäß einer Weiterbildung des Schaltwerks weist der erste Arm auf seiner axialen Innenseite eine Nabenanschlagsfläche auf.

Die beiden Anschlagsflächen bieten jeweils einen Axialanschlag für die in montiertem Zustand an das Basiselement angrenzenden Teile. Ausführungsgemäß liegen ein Adapter von außen, und eine Nabe, insbesondere eine Nabenendkappe, von innen an dem Basiselement an.

Gemäß einer Weiterbildung des Schaltwerks weist der erste Arm auf seiner axialen Innenseite eine Nabenführung auf.

Die Nabenführung erleichtert die Montage des Hinterrads, weil die Nabe, insbesondere die Nabenendkappe, entlang der Nabenführung, insbesondere deren aufeinander zulaufenden Führungsflächen, in ihre Endposition gleiten kann.

Mit der Innenseite des Arms ist wiederrum die in montiertem Zustand des Basiselements in Richtung des Ritzelpakets weisende Seite des Arms gemeint. Mit der Außenseite ist die vom Ritzelpaket wegweisende Seite des Arms gemeint.

Gemäß einer Weiterbildung des Schaltwerks weist der erste Arm eine Achsöffnung zur Durchführung einer Achse auf. Die Achse ist insbesondere eine Steckachse oder eine Schnellspannachse. Der Durchmesser der Achsöffnung muss also größer bemessen sein, als der der Achse, damit diese hindurchgeführt werden kann. In dem vorliegenden Fall bildet die Zentrieröffnung am ersten Arm gleichzeitig die Achsöffnung. Die beiden Öffnungen könnten aber auch getrennt voneinander ausgebildet sein.

Auch der auf der Außenseite des Rahmens montierte zweite Arm des Basiselements kann eine Achsöffnung aufweisen, wenn die Achse bis in den Bereich des zweiten Arms oder darüber hinaus ragt. Bei Schnellspannachsen kann dies der Fall sein. Gemäß einer Weiterbildung des Schaltwerks weist das Basiselement eine Anschlussstelle für eine Seilumlenkung auf. Üblicherweise ist ein vom Rahmen kommendes Schaltseil über die Schaltumlenkung zum Schwenkmechanismus geführt.

Gemäß einer Weiterbildung des Schaltwerks weist das Basiselement eine erste Aufnahme für eine erste Schwenkachse des Schwenkmechanismus und eine zweite Aufnahme für eine zweite Schwenkachse des Schwenkmechanismus auf. Über die erste Schwenkachse ist der innere Schwenkarm des Schwenkmechanismus mit dem Basiselement drehbar verbunden. Über die zweite Schwenkachse ist der äußere Schwenkarm des Schwenkmechanismus mit dem Basiselement drehbar verbunden. Dazu sind die Schwenkachsen in jeweils einer Aufnahme am Basiselement gelagert. Die Achsaufnahmen sind so ausgerichtet, dass sie die orthogonal zur Hinterradachse orientierten Schwenkachsen aufnehmen können. Das heißt, die Aufnahmen bzw. deren Längsachsen sind auf die Schwenkachsen des Schwenkmechanismus abgestimmt und genau wie die Schwenkachsen jeweils orthogonal zur Hinterradachse orientiert. Mit einer Orientierung orthogonal zur Hinterradachse ist gemeint, dass die Längsachsen der ersten und zweiten Aufnahme des Basiselements jeweils in einer Ebene liegen, die die Hinterradachse bzw. eine entlang der Hinterradachse verlaufende geometrische Achse A in einem rechten Winkel schneidet. Geringe Abweichungen aufgrund der üblichen Fertigungstoleranzen sind selbstverständlich möglich. Diese Ausrichtung der Aufnahmen am Basiselement erlaubt die Kopplung mit einem geraden Schwenkmechanismus (gerades Parallelogramm-Viergelenk). Die Anschlussstelle für die Seilumlenkung kann entweder einstückig mit dem Basiselement ausgeführt sein, oder als separates Teil mit diesem verbunden werden. Gleiches gilt für die innere und äußere Achsaufnahme.

Auch das Basiselement selbst kann einstückig oder mehrteilig ausgebildet sein. Ein einstückig aus Metall gefertigtes, insbesondere aus Aluminium gefrästes Basiselement ist besonders stabil und kann sehr genau gefertigt werden. Aber auch andere Materialien wie faserverstärke Kunststoffe können für Teile oder das gesamte Basiselement zum Einsatz kommen.

Gemäß einer Weiterbildung weist das Schaltwerk einen Adapter auf, der eine Schraubverbindung umfasst. Die Schraubverbindung wird insbesondere von einem Bolzen mit einem Außengewinde und einer Mutter mit einem Innengewinde gebildet. Das Schaltwerk ist mit Hilfe des Adapters am Rahmen fixierbar.

Der Adapter ist in eine Rahmenöffnung einsetzbar. Mit anderen Worten durchgreift der Adapter die Rahmenöffnung. Die Rahmenöffnung kann je nach verwendeter Achse unterschiedlich ausfallen. Steckachsen werden üblicherweise in vom Rahmen umschlossene Öffnungen eingesteckt. Schnellspannachsen werden dagegen meist von unten in eine schlitzartige Öffnung eingeführt.

Der Adapter ist mittels der Schraubverbindung am Rahmen fixierbar. Dazu weist der Adapter an seinen beiden Enden Außendurchmesser auf, die größer bemessen sind, als der Durchmesser der Rahmenöffnung. Ein Ende des Adapters liegt auf der Innenseite des Rahmens und das andere Ende auf der Außenseite. Durch Anziehen der Schraubverbindung ist der Adapter gegenüber dem Rahmen sowohl in axiale Richtung, als auch rotatorisch festlegbar. Der Bolzenkopf des Bolzens und die Mutter sind größer bemessen als die Rahmenöffnung und liegen an dessen Innen- und Außenseite an. Die Mutter weist eine gerändelte Anlagefläche auf, die in fertig montiertem Zustand kraft- und formschlüssig am Rahmen anliegt.

Gemäß einer Weiterbildung des Schaltwerks weist der Bolzen einen Bolzenkörper mit einem Anlagebereich und einem Ausgleichsbereich auf. Der Anlagebereich liegt am Innendurchmesser der Rahmenöffnung an. Der Ausgleichsbereich läuft beispielsweise konisch zu und hat etwas mehr Spiel gegenüber der Rahmenöffnung. Aufgrund des erhöhten Spiels kann der Bolzen und damit der gesamte Adapter gegenüber der Rahmenöffnung ausgerichtet werden. Rahmenungenauigkeiten können so ausgeglichen werden. Der Adapter kann sich koaxial mit der Hinterradachse A ausrichten, auch wenn die Rahmenöffnungsachse toleranzbedingt von dieser abweicht.

Gemäß einer Weiterbildung des Schaltwerks weist der Adapter eine Achsöffnung auf, in der ein Innengewinde angeordnet ist. In das Innengewinde ist das Gegengewinde einer Steckachse schraubbar. Insbesondere der Bolzen weist die Achsöffnung mit dem Innengewinde auf.

Das Außengewinde des Bolzens und das Innengewinde des Bolzens sind in Bereichen entlang der Bolzenlängsachse angeordnet, die sich nicht oder nur geringfügig überschneiden. Mit dieser Anordnung können die über die Gewinde auf den Bolzen übertragenen Kräfte am besten aufgenommen werden.

Gemäß einer Weiterbildung des Schaltwerks ist ein erster Außendurchmesser des Adapters auf einen Innendurchmesser der ersten Zentrieröffnung des Basiselements abgestimmt. Und ein zweiter Außendurchmesser des Adapters ist auf einen Innendurchmesser der zweiten Zentrieröffnungen des Basiselements abgestimmt. Insbesondere der erste Außendurchmesser eines Zentrierfußes des Bolzens ist auf die erste Zentrieröffnung abgestimmt. Ein zweiter Außendurchmesser des Bolzenkopfes ist auf die zweite Zentrieröffnung abgestimmt.

Eine Spielpassung zwischen dem Adapter und den Zentrieröffnungen des Basiselements erlaubt es, den Adapter in das Basiselements einzusetzen und damit das Basiselement gegenüber dem Adapter zu zentrieren.

Gemäß einer Weiterbildung des Schaltwerks liegt der Adapter, insbesondere die Anschlagsfläche des Bolzens, in montiertem Zustand an der Adapteranschlagsfläche des Basiselements an. Dadurch wird eine Axialbewegung des Adapters gegenüber dem Basiselement nach innen begrenzt.

Gemäß einer Weiterbildung des Schaltwerks weist das Basiselement einen Anschlag und der Adapter einen Gegenanschlag auf. Wird der Adapter im Uhrzeigersinn (UZS) gedreht, trifft er mit seinem Gegenanschlag auf den Anschlag des Basiselements und dreht dieses mit. Die Verdrehung des Adapters gegenüber dem Basiselement wird durch die Anschläge begrenzt. Der Anschlag am Basiselement wird insbesondere von zwei Stiften am ersten Arm des Basiselements gebildet, die mit zwei Vorsprüngen an der Mutter zusammenwirken.

Ein zweiter Aspekt der Erfindung löst die Aufgabe mit einem hinteren Schaltwerk zur koaxialen Montage gemäß Anspruch 12.

Gemäß des zweiten Aspekts der Erfindung ist das erfindungsgemäße hintere Schaltwerk zur koaxialen Montage an einer Hinterradachse geeignet. Das Schaltwerk weist ein Basiselement, einen Schwenkmechanismus, ein bewegliches Element und eine Kettenführungsanordnung auf. Der Schwenkmechanismus verbindet das Basiselement mit dem beweglichen Element. Die Kettenführungsanordnung ist um eine Drehachse P drehbar mit dem beweglichen Element verbunden. Das Basiselement schlägt in fahrbereitem Zustand axial an einer Nabenendkappe an. Insbesondere stützt sich die Nabenanschlagsfläche des ersten Arms des Basiselements an der Nabenendkappe ab.

Damit ist das Schaltwerk in axialer Richtung an der Nabe referenziert.

Gemäß einer Weiterbildung des Schaltwerks ist der erste Arm des Basiselements in fahrbereitem Zustand zwischen der Nabenendkappe und dem Adapter angeordnet. Insbesondere ist der erste Arm des Basiselements kraftschlüssig und drehfest zwischen der Nabenendkappe und dem Adapter festgelegt.

Der Kraftschluss wird durch Festziehen einer Achse, insbesondere der Steckachse, erzeugt. Das Basiselement wird dabei zwischen der Nabenendkappe und dem Adapter geklemmt und gleichzeitig orthogonal zur Nabenachse ausgerichtet. Die übliche Referenzierung des Schaltwerks am Rahmen entfällt, so dass sich Fertigungstoleranzen des Rahmens nicht mehr negativ auf die Positionierung und Einstellung des Schaltwerks auswirken. Idealerweise ist das Basiselement mit Spiel zum Rahmen positioniert, so dass es diesen gerade nicht berührt.

In fahrbereitem Zustand ist das Schaltwerk und das Hinterrad eingebaut und die Steckachse festgezogen. Das Basiselement ist dann sowohl in axialer Richtung festgelegt, als auch drehfest an der Hinterradachse montiert. Außerdem umgreift das Basiselement den Adapter und ist gegenüber diesem zentriert.

Alternativ zur Nabenendkappe, kann bei anderen Nabenkonstruktionen auch eine Achsmutter oder ein anderes vergleichbares Funktionsteil am Basiselement anschlagen. Wichtig ist, dass dieses Funktionsteil eine senkrechte Ausrichtung des Basiselements und damit des Schaltwerks zur Hinterradachse A erlaubt.

Ein dritter Aspekt der Erfindung löst die Aufgabe mit einem hinteren Schaltwerk zur koaxialen Montage gemäß Anspruch 14.

Gemäß des dritten Aspekts der Erfindung ist das erfindungsgemäße hintere Schaltwerk zur koaxialen Montage an einer Hinterradachse geeignet. Das Schaltwerk weist ein Basiselement, einen Schwenkmechanismus, ein bewegliches Element und eine Kettenführungsanordnung auf. Der Schwenkmechanismus verbindet das Basiselement mit dem beweglichen Element. Die Kettenführungsanordnung ist um eine Drehachse P drehbar mit dem beweglichen Element verbunden. Der Schwenkmechanismus umfasst zumindest eine Schwenkachse, die orthogonal zur Hinterradachse A orientiert ist. Die orthogonale Ausrichtung der Schwenkachsen ist dabei unabhängig von der gewählten Relativstellung des Schaltwerks.

Das heißt, die Schwenkachse liegt in einer Ebene, die die Hinterradachse bzw. eine entlang der Hinterradachse verlaufende geometrische Achse A in einem rechten Winkel schneidet. Aufgrund von Fertigungstoleranzen und Montageungenauigkeiten kann dieser Winkel auch ein wenig abweichen. Die Hinterradachse, die Nabenachse, die Drehachse der Ritzel und das montierte Basiselement erstrecken sich auf derselben Achse A.

Gemäß einer Weiterbildung des Schaltwerks ist der Schwenkmechanismus als Parallelogramm-Viergelenk mit vier Schwenkachsen ausgebildet. Alle vier Schwenkachsen sind orthogonal zur Hinterradachse orientiert.

Aufgrund der orthogonal zur Hinterradachse orientierten Schwenkachsen bewegt sich der Schwenkmechanismus nur in die axiale Richtung. Schläge auf das Schaltwerk, wie sie beim Fahren in unebenem Terrain auftreten, können vom Schwenkmechanismus aufgenommen werden, ohne diesen zu bewegen. Ein ungewolltes Schalten wird verhindert.

Darüber hinaus lässt sich ein Schaltwerk mit einem geraden Parallelogramm-Viergelenk besonders leicht montieren und einstellen. Das Montieren und Einstellen wird weiter unten ausführlich beschrieben.

Gemäß einer Weiterbildung des Schaltwerks verbindet eine erste Schwenkachse einen inneren Schwenkarm des Schwenkmechanismus drehbar mit einer inneren Aufnahme am Basiselement. Eine zweite Schwenkachse verbindet einen äußeren Schwenkarm des Schwenkmechanismus drehbar mit einer äußeren Aufnahme am Basiselement. Die Aufnahmen sind axial mit den Schwenkachsen ausgerichtet. Die Längsachsen der Aufnahmen verlaufen also genau wie die aufgenommenen Schwenkachsen orthogonal zur Hinterradachse. Die Aufnahmen sind am zweiten Anschlussende des Basiselements angeordnet, welches in Richtung des Schwenkmechanismus weist.

Gemäß einer Weiterbildung des Schaltwerks umfasst die Kettenführungsanordnung ein oberes Kettenführungsröllchen. Das obere Kettenführungsröllchen ist in einem konstanten oberen Abstand von der Drehachse P der Kettenführungsanordnung mit dem beweglichen Element drehbar angeordnet. Das Schaltwerk umfasst weiter ein unteres Kettenführungsröllchen, das in einem konstanten unteren Abstand von der Drehachse P der Kettenführungsanordnung mit dem beweglichen Element drehbar angeordnet ist.

Der obere Abstand zwischen dem oberen Kettenführungsröllchen und der Drehachse P ist kürzer bemessen, als der untere Abstand zwischen dem unteren Kettenführungsröllchen und der Drehachse P.

Die drei Aspekte der Offenbarung können sowohl separat voneinander betrachtet und umgesetzt werden, als auch in Kombination von zwei oder drei Aspekten. Die gezeigten Ausführungsformen zeigen eine Kombination aller drei Aspekte. Es wären aber auch Ausführungen denkbar, die nur einen oder zwei der genannten drei Aspekte verwirklichen. Beispielsweise ein Schaltwerk, das nur die ersten beiden Aspekte, nicht aber den dritten Aspekt verwirklicht und statt des geraden einen schrägen Parallelogramm-Mechanismus verwendet. Oder ein Schaltwerk, das nur den zweiten und/oder dritten Aspekt, nicht aber den ersten Aspekt verwirklicht und ein Basiselement mit nur einem anstelle von zwei Armen umfasst.

Ein Schrägparallelogramm wäre grundsätzlich denkbar, müsste aber entsprechend angepasst werden. Gerade bei Rennrädern, die weniger starken Stößen ausgesetzt sind und meist Ritzelpakete mit einer geringeren Spreizung umfassen, wäre es eine Möglichkeit.

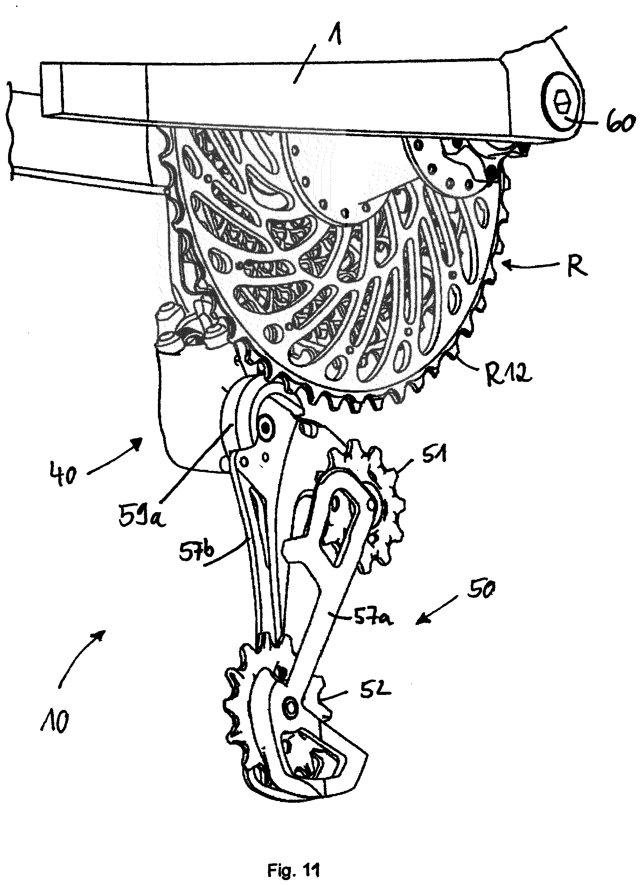

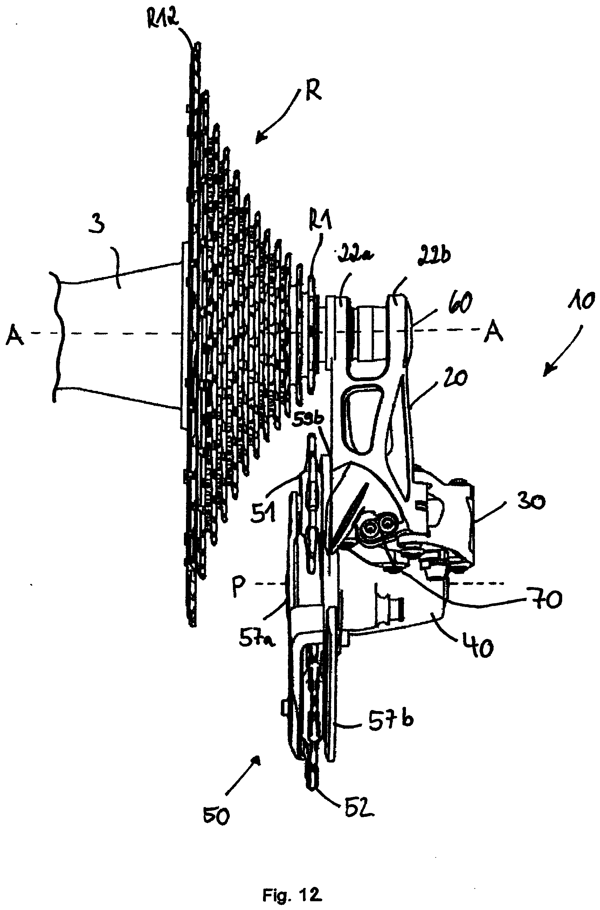

Dank der verbesserten Positionierungsgenauigkeit des erfindungsgemäßen Schaltwerks relativ zum Ritzelpaket, ist es denkbar, auf die herkömmlichen Begrenzungsschrauben für den inneren und äußeren Anschlag des Schaltwerks (limit screws) zu verzichten. Mit diesen Begrenzungsschrauben wurde bisher die Maximalbewegung des Schaltwerks in axialer Richtung eingestellt und verhindert, dass das die Kettenführungsanordnung axial über die Ritzelebenen des größten Ritzels (innen) und des kleinsten Ritzels (außen) hinaus bewegt wird. Das Justieren und Nachjustieren der Begrenzungsschrauben ist fehleranfällig. Feste Begrenzungsanschläge an der Kettenführungsanordnung wären eine Möglichkeit, die Schrauben zu ersetzen. Ein erster Begrenzungsanschlag könnte mit dem größten Ritzel zusammenwirken, um die Axialbewegung nach innen zu begrenzen. Ein zweiter Begrenzungsanschlag könnte mit dem Basiselement zusammenwirken, um die Axialbewegung nach außen zu begrenzen (vgl. Figuren 11 und 12).

Gemäß einer Ausführungsform des hinteren Schaltwerks weist das Schaltwerk, insbesondere das bewegliche Element ein Arretierungselement auf. Das Arretierungselement erlaubt es, die vorgespannte Kettenführungsanordnung zum Einstellen des Schaltwerks gegenüber dem beweglichen Element festzulegen. Das Einstellverfahren wird im Zusammenhang mit den Figuren erklärt.

Gemäß einer Ausführungsform des hinteren Schaltwerks weist das erste Anschlussende des Basiselements eine erste Zentrieröffnung auf, welche im fahrbereiten Zustand mit einer Zentrieroberfläche der Steckachse zusammenwirkt. Das direkte Zusammenwirken der ersten Zentrieröffnung des Basiselements und der Zentrieroberfläche der Steckachse führt zur direkten Zentrierung des Basiselements auf der Steckachse. Mit anderen Worten ist das Basiselement auf der Steckachse referenziert, so dass sich Fertigungstoleranzen des Rahmens nicht auf die Zentrierung des Schaltwerks auswirken.

Gemäß einer Ausführungsform des hinteren Schaltwerks ist an dem beweglichen Element oder an der Kettenführungsanordnung ein erster Begrenzungsanschlag angeordnet. Der erste bzw. innere Begrenzungsanschlag ist in einer inneren Maximalposition des Schaltwerks zum Zusammenwirken mit einem Ritzelpaket ausgebildet. Der innere Begrenzungsanschlag des Schaltwerks begrenzt eine Axialbewegung des Schaltwerks nach innen. In der inneren Maximalposition des Schaltwerks befindet sich eine Kette auf dem innersten, also größten Ritzel des Ritzelpakets. Der erste Begrenzungsanschlag verhindert, dass das Schaltwerk über die vorgesehene innere Maximalposition hinweg weiter in axialer Richtung bewegt werden kann. Eine Kollision des Schaltwerks mit den Fahrradspeichen ist ausgeschlossen.

Gemäß einer Ausführungsform des hinteren Schaltwerks ist an der Kettenführungsanordnung ein äußerer Begrenzungsanschlag angeordnet. Der zweite bzw. äußere Begrenzungsanschlag ist in einer äußeren Maximalposition des Schaltwerks zum Zusammenwirken mit dem Basiselement ausgebildet. Der äußere Begrenzungsanschlag des Schaltwerks begrenzt eine Axialbewegung des Schaltwerks nach außen. In der äußeren Maximalposition des Schaltwerks befindet sich eine Kette auf dem äußersten, also kleinsten Ritzel des Ritzelpakets. Der zweite Begrenzungsanschlag verhindert, dass das Schaltwerk über die vorgesehene, äußere Maximalposition hinweg weiter in axialer Richtung bewegt werden kann.

Die Begrenzungsanschläge erlauben es, auf herkömmliche wartungsintensive Begrenzungsschrauben (limit screws) zu verzichten.

Die beschriebenen Schaltwerksausführungen erlauben sowohl eine radiale Zentrierung des Basiselements auf dem Adapter, genauer gesagt auf dem Bolzenfuß des Adapters, als auch eine radiale Zentrierung des Basiselements direkt auf einer Zentrieroberfläche der Steckachse. Dies hat den Vorteil, dass dasselbe Basiselement mit Steckachsen unterschiedlicher Durchmesser verwendet werden kann. Das Schaltwerk kann größtenteils unverändert bleiben. Lediglich der Adapter, insbesondere der Bolzen, zur Befestigung des Schaltwerks am Rahmen muss auf die Außenmaße der jeweils verwendeten Steckachse angepasst werden. Übliche Außendurchmesser für Steckachsen sind 12 mm und 15 mm. Diese Ausführung erlaubt es auch, dieselbe Nabenanordnung lediglich durch den Austausch der Steckachse schnell und kostengünstig auf unterschiedliche Bedingungen anzupassen. So kann beispielsweise zur Erhöhung der Steifigkeit der Hinterradachsanordnung eine 12 mm Steckachse durch eine 15 mm Steckachse ersetzt werden. Unterschiedliche Wandstärkenausführungen der 15 mm Steckachse erlauben darüber hinaus die Anpassung auf besonders leichte oder besonders steife Hinterradachsanordnungen.

Ein vierter Aspekt der Erfindung stellt eine alternative Lösung für eine von Rahmentoleranzen unabhängige Referenzierung des Schaltwerks zur Verfügung. Gemäß einer Ausführungsform ist das hintere Schaltwerk zur koaxialen Montage an einer Hinterradachse geeignet. Das Schaltwerk weist ein Basiselement, einen Schwenkmechanismus, ein bewegliches Element und eine Kettenführungsanordnung auf. Der Schwenkmechanismus verbindet das Basiselement mit dem beweglichen Element. Die Kettenführungsanordnung ist um eine Drehachse P drehbar mit dem beweglichen Element verbunden. Das Basiselement umfasst ein erstes Anschlussende zur koaxialen Montage an der Hinterradachse und ein zweites Anschlussende zur Kopplung mit dem Schwenkmechanismus. Das erste Anschlussende des Basiselements weist eine erste Zentrieröffnung zur direkten Zentrierung des Basiselements auf einer Steckachse auf.

Gemäß einer Ausführungsform des hinteren Schaltwerks ist die erste Zentrieröffnung in einem ersten Arm des Basiselements ausgebildet.

Im fahrbereiten Zustand wirkt die erste Zentrieröffnung des Basiselements direkt mit der eingeschraubten Steckachse, insbesondere einer Zentrieroberfläche der Steckachse, zusammen. Das direkte Zusammenwirken der ersten Zentrieröffnung des Basiselements und der Zentrieroberfläche der Steckachse führt zur Zentrierung des Basiselements direkt auf der Steckachse. Mit anderen Worten ist das Basiselement auf der Steckachse referenziert, so dass sich Fertigungstoleranzen des Rahmens nicht auf die Zentrierung des Schaltwerks auswirken.

Gemäß einer Ausführungsform weist das Basiselement einen zweiten Arm auf, der in axialer Richtung vom ersten Arm beabstandet angeordnet ist. Der zweite Arm weist eine zweite Zentrieröffnung auf. Im fahrbereiten Zustand wirkt die erste Zentrieröffnung des ersten Arms mit der Zentrieroberfläche der Steckachse zusammen und die zweite Zentrieröffnung des zweiten Arms wirkt mit dem Adapter, insbesondere dem Außendurchmesser des Bolzenkopfes des Adapters zusammen. Diese Anordnung erlaubt eine präzise Ausrichtung des hinteren Schaltwerks senkrecht zur Hinterradachse.

Gemäß einer Ausführungsform des hinteren Schaltwerks ist das Basiselement derart ausgebildet, dass es im fahrbereiten Zustand axial an einer Nabenendkappe anschlägt. Insbesondere ist eine axiale Nabenanschlagsfläche des ersten Arms des Basiselements dazu ausgebildet, an der Nabenendkappe anzuschlagen.

Gemäß einer Ausführungsform des hinteren Schaltwerks umfasst der Schwenkmechanismus zumindest eine Schwenkachse, die orthogonal zur Hinterradachse orientiert ist. Die Vorteile von orthogonal ausgerichteten Schaltwerken wurden bereits in Zusammenhang mit den vorhergehenden Ausführungsformen erläutert.

Ein fünfter Aspekt der Erfindung betrifft eine Steckachse zum Einschrauben in ein hinteres Schaltwerk, insbesondere in ein Schaltwerk zur koaxialen Montage wie es im Vorhergehenden beschrieben wurde. Gemäß des fünften Aspekts ist die Steckachse zum Einschrauben in ein hinteres Schaltwerk geeignet. Die Steckachse weist ein erstes Steckachsenende und ein zweites Steckachsenende auf. Die Steckachse weist an einer äußeren Umfangsfläche im Bereich des zweiten Endes ein Außengewinde und eine Zentrieroberfläche auf. Die Zentrieroberfläche dient der Zentrierung des Basiselements direkt auf der Steckachse. Im eingeschraubten Zustand wirkt die Zentrieroberfläche der Steckachse mit einer ersten Zentrieröffnung des Basiselements zur direkten Zentrierung des Basiselements auf der Steckachse zusammen.

Gemäß einer Ausführungsform ist die Steckachse hohl ausgebildet. Die Steckachse weist im Bereich des Außengewindes und/oder der Zentrieroberfläche eine größere Wandstärke als in anderen Bereichen auf.

Ein sechster Aspekt der Erfindung stellt eine ausreichend steife und dennoch leichtgewichtige Hinterradachsanordnung für ein Fahrrad bereit *(stiffness to weight ratio*). Diese Ausführung ist gerade für MTBs und E-MTBs von Bedeutung.

Aus dem Stand der Technik bekannte Hinterradachsanordnungen neigen zum Brechen der Nabenachse (Hohlachse). Das liegt unter anderem daran, dass die Nabenachse im Vergleich zur Steckachse hohen maximalen Biegespannungen unterliegt. Es hat sich als vorteilhaft erwiesen, die auftretenden Spannungen und Kräfte möglichst gleichmäßig auf die Nabenachse und die Steckachse zu verteilen und damit ein Brechen eines der beiden Bauteile zu verhindern. Sowohl die Nabenachse, als auch die Steckachse werden gleichmäßiger belastet und nicht mehr einseitig überlastet. Eine gleichmäßige Verteilung wird insbesondere dann erreicht, wenn das Verhältnis des Flächenträgheitsmoments der Nabenachse zum Flächenträgheitsmoment der Steckachse relativ ausgeglichen ist. Das Flächenträgheitsmomentverhältnis von Nabenachse zu Steckachse liegt im Bereich von etwa 0,8 bis 1,5, insbesondere bei etwa 1,1. Unter anderem wirkt sich positiv aus, dass die Nabenachse auf Druck und die Steckachse auf Zug belastet wird. Die Druck- und Zugspannungen überlagern sich mit den Biegespannungen und gleichen einander zum Teil aus.

Gemäß dem sechsten Aspekt umfasst eine Hinterradachsanordnung für ein Fahrrad eine Nabenanordnung und eine Steckachse. Die Nabenanordnung umfasst eine um die Hinterradachse drehbare Hinterradnabe (auch als Nabenhülse bezeichnet), eine hohle Nabenachse (auch Hohlachse genannt) und eine Nabenlagerung. Die Nabenlagerung ermöglicht die drehbare Lagerung der Hinterradnabe relativ zu der Nabenachse um die Hinterradachse. Die hohle Steckachse ist zur Fixierung der Nabenanordnung an einem Fahrradrahmen in die hohle Nabenachse einsteckbar und in ein hinteres Schaltwerk schraubbar ausgebildet. Die hohle Steckachse weist zumindest im Bereich der Nabenlager eine Wandstärke auf, die mindestens so groß wie eine Wandstärke der Nabenachse bemessen ist.

Aufgrund des deutlich erhöhten Flächenträgheitsmoments haben Steckachsen mit einem erhöhten Außendurchmesser von 15 mm einen positiven Effekt auf die Steifigkeit der gesamten Hinterradachsanordnung. Die Steckachse ist ebenfalls ein tragendes Bauteil. Der vergrößerte Durchmesser der Steckachse trägt zu einem ausgeglichenen Flächenträgheitsmoment von Nabenachse und Steckachse bei. Insbesondere haben sich Hinterradachsanordnungen bewährt, welche eine Nabenachse mit einem Außendurchmesser von etwa 17 mm und einen Innendurchmesser von etwa 15 mm kombiniert mit einer Steckachse mit einem Außendurchmesser von etwa 15 mm umfassen. Die Durchmesser der Steckachse und der Nabenachse sind so aufeinander abgestimmt, dass die Steckachse mit einer Spielpassung in die Nabenachse eingeschoben werden kann. Die Steckachse kann je nach Einsatzgebiet beispielsweise eine Wandstärke von 1,5 mm (Standard), 1 mm (Leichtbau) und 2 mm (E-Bike) aufweisen. Diese Auslegungen führen zu einer ausgeglichenen Belastung von Nabenachse und Steckachse. Die verschiedenen Steckachsen können je nach Einsatzgebiet mit derselben Nabenachse verwendet werden. Mit anderen Worten kann dieselbe Nabenanordnung durch Austausch der Steckachse kostengünstig und schnell angepasst werden (Baukastenprinzip).

Die sechs Aspekte der Erfindung können sowohl separat voneinander betrachtet umgesetzt werden, als auch in Kombination von mehreren Aspekten.

Die Offenbarung betrifft weiterhin einen Fahrradantrieb, der ein erfindungsgemäßes Schaltwerk, eine Mehrfach-Ritzelanordnung mit elf, zwölf oder mehr Ritzeln, eine Fahrradkette und eine Kettenringanordnung mit insbesondere genau einem Kettenring umfasst. Das erfindungsgemäße Schaltwerk kann elektrisch gesteuert sein. Genauso kann bei mehreren Kettenringen auch der Umwerfer elektrisch gesteuert sein. Vorteilhaft ist insbesondere eine kabellose Steuerung des Schaltwerks und/oder des Umwerfers. Elektrisch gesteuerte Schaltwerke umfassen üblicherweise eine Getriebeeinheit und eine Batterie. Die Getriebeeinheit und/oder Batterie könnte platzsparend in einem Hohlraum des Basiselements, z. B. zwischen den beiden Armen des Basiselements angeordnet sein. An dieser Position wäre sie von der Struktur des Basiselements vor äußeren Einwirkungen geschützt und gegenüber dem Rahmen unbeweglich.

Es kann zumindest ein Ritzel der Ritzelanordnung eine Abfolge von einem dünnen Zahn, einem dicken Zahn und einem weiteren dünnen Zahn aufweisen. Dabei ist ein dicker Zahn in axialer Richtung so dick ausgebildet, dass er in ein Außenlaschenpaar der Kette eingreifen kann, nicht aber in ein Innenlaschenpaar. Dies wirkt sich positiv auf die Kettenführung aus. Die Abfolge kann sich entlang des Umfangs eines Ritzels mehrfach wiederholen. Bei Ritzeln mit gerader Zähnezahl können auch alle Zähne im Wechsel dünn und dick ausgebildet sein. Die axiale Verdickung kann entweder auf beiden Seiten des Ritzels ausgeprägt sein, oder nur an einer. Vorzugsweise ist die Verdickung nur an der Rückseite des Ritzels angeordnet. Gerade an den beiden größten Ritzeln ist sie von besonderer Bedeutung, weil dort der Kettenschräglauf am stärksten ausgebildet ist (vgl. Figur 11 mit dicken und dünnen Zähnen am größten Ritzel 12). Durch die verbesserte Führung der Kette werden die Negativfolgen des Kettenschräglaufs minimiert. Auch der Kettenring kann alternierende dicke und dünne Zähne aufweisen, die der verbesserten Kettenführung dienen.

### Kurzbeschreibung der Zeichnungen:

- Fig. 1: Perspektivische Außenansicht eines erfindungsgemäßen Schaltwerks
- Fig. 2: Schnittdarstellung von Fig. 1 entlang der Achse A ohne Nabenanordnung
- Fig. 3: Seitenansicht des erfindungsgemäßen Schaltwerks
- Fig. 4: Perspektivische Innenansicht des Basiselements am Rahmen montiert
- Fig. 5: Perspektivischer Teilschnitt des Basiselements aus Fig. 4 mit Adapter
- Fig. 6: Vergrößerte Ansicht von Fig. 5 ohne Nabenanordnung
- Fig. 7: Vollschnittdarstellung der Anordnung aus Fig. 6
- Fig. 8: Explosionsdarstellung des Basiselements und des Adapters
- Fig. 9a: Perspektivische Außenansicht des Basiselements
- Fig. 9b: Perspektivische Innenansicht des Basiselements
- Fig. 10: Teilschnitt durch eine zweite Ausführungsform mit Einstellhilfe
- Fig. 11: Innenansicht einer dritten Ausführungsform in der inneren Anschlagposition
- Fig. 12: Rückansicht der dritten Ausführungsform in der äußeren Anschlagposition
- Fig. 13: Fahrrad mit einem herkömmlichen Schaltwerk - Stand der Technik
- Fig. 14: Schnittdarstellung einer vierten Ausführungsform
- Fig. 15a: Schnittdarstellung einer fünften Ausführungsform
- Fig. 15b: Perspektivische Außenansicht aus Fig. 15a
- Fig. 16: Vergrößerte Detailansicht aus Fig. 15b
- Fig. 17: Ausgewählte Teile aus Fig. 16
- Fig. 18: Ausgewählte Teile aus Fig. 16
- Fig. 19: Vergrößerte Explosionsdarstellung des Adapters der fünften Ausführungsform
- Fig. 20a: Steckachse gemäß der fünften Ausführungsform
- Fig. 20b: Schnittdarstellung der Steckachse aus Fig. 20a
- Fig. 21: Schnittdarstellung der gesamten Hinterradachsanordnung mit Steckachse gemäß der fünften Ausführungsform
- Fig. 22: Schnittdarstellung ausgewählter Teile der Hinterradachsanordnung aus Fig.21
- Fig. 23: Schnittdarstellung ausgewählter Teilen aus Fig. 22
- Fig. 24a: Teilschnittdarstellung ausgewählter Teile einer Hinterradachsanordnung mit einer Steckachse gemäß einer sechsten Ausführungsform
- Fig. 24b: Perspektivische Außenansicht von Fig. 24a
- Fig. 25a: Steckachse gemäß der sechsten Ausführungsform
- Fig. 25b: Schnittdarstellung der Steckachse aus Fig. 25a

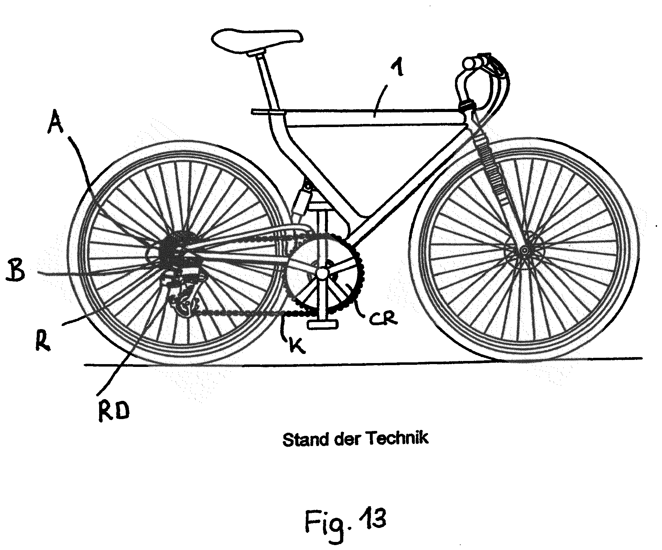

Figur 13 zeigt exemplarisch ein Fahrrad mit einem aus dem Stand der Technik bekannten Fahrradantrieb. Der Fahrradantrieb umfasst ein vorderes Kettenrad CR, ein hinteres Ritzelpaket R und eine Kette K, die mittels des hinteren Schaltwerks RD von einem Ritzel zum nächsten bewegt werden kann. Die im Folgenden verwendeten Richtungsangaben rechts/links und vorne/hinten beziehen sich auf ein Fahrrad in Fahrtrichtung. Der Fahrradrahmen 1 hat ein linkes und ein rechtes hinteres Ausfallende, zwischen denen das Hinterrad montiert ist. Das Hinterrad dreht sich zusammen mit dem Ritzelpaket R um die Hinterradachse A. Axial bezieht sich auf die Hinterradachse A bzw. die Drehachse A der Mehrfach-Ritzelanordnung R. Das größte Ritzel liegt axial weiter innen als die kleineren Ritzel. Die Zähne sind radial außen an den Ritzeln angeordnet. Der Außendurchmesser eines Ritzels ist das radial äußere Ende, der Innendurchmesser das radial innere Ende des Ritzels. Das hier gezeigte Schaltwerk RD ist auf herkömmliche Weise mit einem Schaltauge am rechten Ausfallende des Rahmens befestigt. Damit ist das bekannte Schaltwerk RD von der Hinterradachse A beabstandet und nicht koaxial mit dieser montiert. Das Schaltwerk RD dreht sich um die B-Achse, welche von der Achse A beabstandet ist. Der Schwenkmechanismus des Schaltwerks ist als Schrägparallelogramm ausgeführt.

Für ein besseres Verständnis der Erfindung zeigen die Figuren verschiedene Montagestadien des Schaltwerks und der Hinterradachsanordnung in unterschiedlich großen Maßstäben.

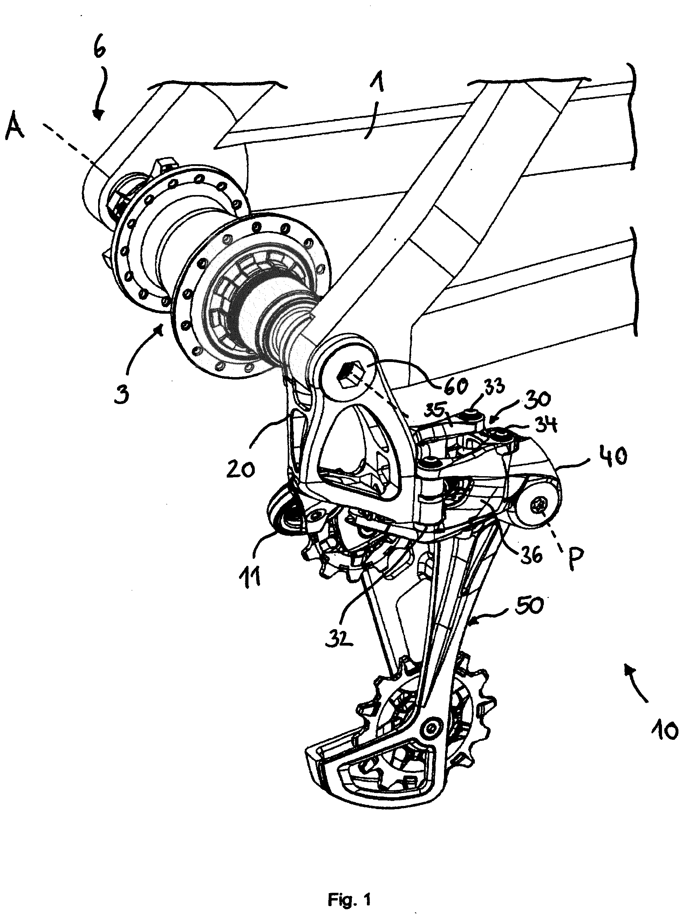

Figur 1 zeigt eine perspektivische Ansicht des koaxial an der Hinterradachse 6 montierten, erfindungsgemäßen hinteren Schaltwerks 10. Zur besseren Übersichtlichkeit sind das Hinterrad und das Ritzelpaket nicht dargestellt. Zu sehen ist die zwischen den beiden Ausfallenden des Rahmens 1 angeordnete Hinterradnabe 3 und das, das rechte Ausfallende umgreifende Schaltwerk 10. Das Basiselement 20 ist mittels des Adapters 60 koaxial mit der Achse A am Rahmen 1 montiert.

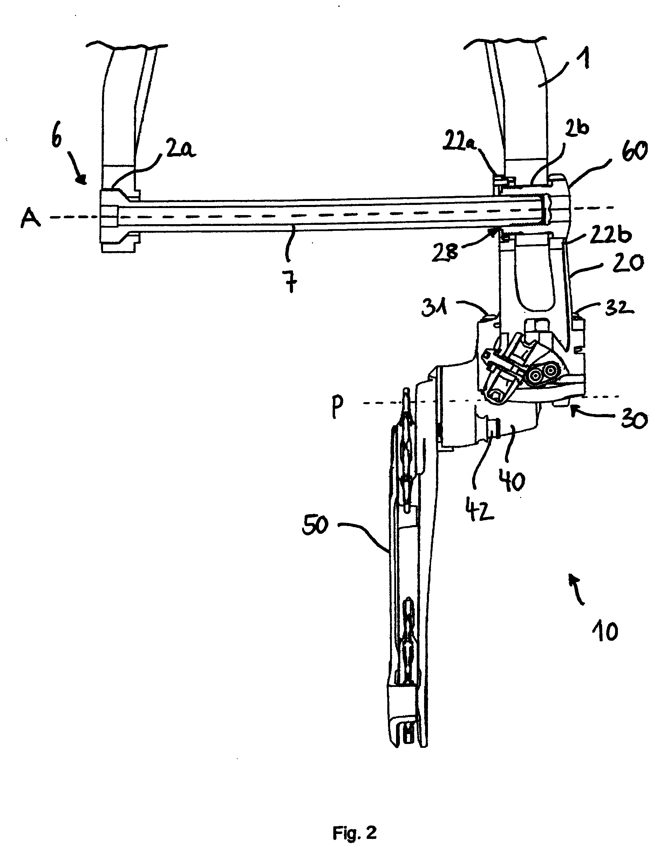

Figur 2 zeigt einen Schnitt entlang der Achse A des in Figur 1 dargestellten Schaltwerks 10 in der Rückansicht. Die geometrische Achse A erstreckt sich entlang der Hinterradachse 6. Einfachheitshalber ist in dieser Darstellung nur die Steckachse 7 und nicht die übrigen Teile der Achs- und Nabenanordnung gezeigt. Das Basiselement 20 ist mittels des Adapters 60 am rechten Ausfallende befestigt. Dazu durchgreift der Adapter 60 die rechte Rahmenöffnung 2b. Die Steckachse 7 ist in die linke Rahmenöffnung 2a eingesteckt und mit dem Adapter 60 verschraubt. Der Adapter 60 dient gleichzeitig als Konter für die Steckachse 7. Wenn die Steckachse 7 angezogen wird, schraubt sie sich weiter in den Adapter 60 und klemmt gegenüber dem Rahmen 1.

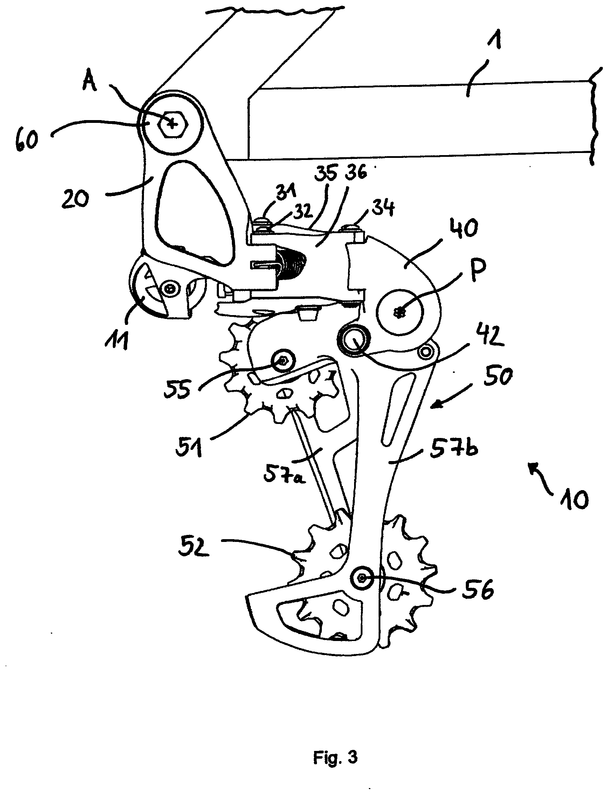

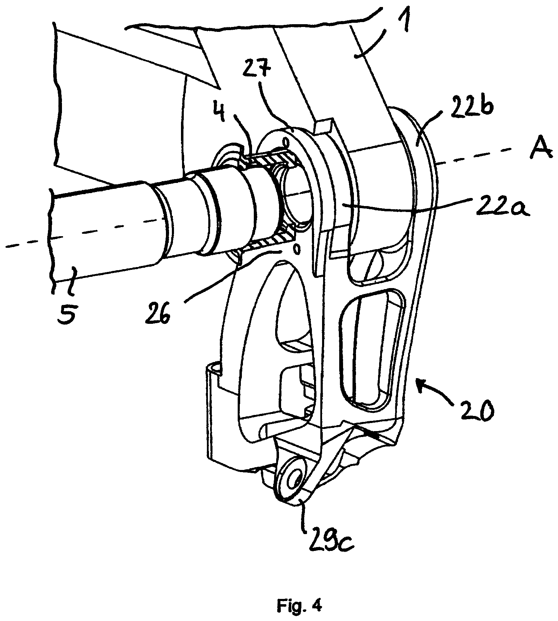

Figur 3 zeigt eine Seitenansicht des erfindungsgemäßen am Rahmen 1 montierten Schaltwerks 10 aus Figur 2. Die Figuren 1 bis 3 zeigen jeweils das gesamte Schaltwerk 10 mit dem Basiselement 20, dem Schwenkmechanismus 30, dem beweglichen Element 40 und der Kettenführungsanordnung 50. An dem Basiselement 20 ist eine Seilumlenkung 11, hier in Form einer an der Anschlussstelle 29c drehbar gelagerten Seilumlenkungsrolle angeordnet. Das Basiselement 20 ist an seinem ersten, oberen Anschlussende koaxial mit der Hinterradachse A am Rahmen 1 montiert. Dazu umgreifen zwei in axialer Richtung voneinander beabstandete Arme des Basiselements 20 das Ausfallende des Rahmens 1, so dass ein Arm auf der Innenseite des Rahmens 1 und der andere Arm auf der Außenseite des Rahmens 1 angeordnet ist. Das Basiselement 20 wird mit dem Adapter 60 am Rahmen 1 vormontiert. Weiter ist das Basiselement 20 an seinem zweiten, unteren Anschlussende mit dem Schwenkmechanismus 30 gekoppelt. Der Schwenkmechanismus 30 ist als Parallelogramm-Viergelenk mit einem inneren Schwenkarm 35, einem äußeren Schwenkarm 36 und vier Schwenkachsen 31, 32, 33, 34 ausgebildet. Die vier Schwenkachsen 31, 32, 33, 34 verlaufen jeweils in Ebenen, die die Achse A im rechten Winkel schneiden. Mit anderen Worten liegen die Schwenkachsen 31, 32, 33, 34 in Ebenen, die sich parallel zu den hier nicht gezeigten Ritzelebenen erstrecken (vgl. Figur 11 bis 13). Die erste und zweite Schwenkachse 31, 32 verbindet den Schwenkmechanismus 30 mit dem Basiselement 20. Die dritte und vierte Schwenkachse 33, 34 verbindet den Schwenkmechanismus 30 mit dem beweglichen Element 40. Sowohl das Basiselement 20, als auch das bewegliche Element 40 weisen jeweils zwei Aufnahmen für die Schwenkachsen auf. Die Längsachsen L1, L2 der Aufnahmen am Basiselement 20 und die Längsachsen der Aufnahmen am beweglichen Element 40 sind wie die Schwenkachsen 31, 32, 33, 34 selbst orthogonal zur Hinterradachse 6 bzw. der Achse A ausgerichtet (vgl. Figuren 4 bis 9). Die Kettenführungsanordnung 50 ist um die Achse P drehbar mit dem beweglichen Element 40 verbunden und im UZS (nach hinten) vorgespannt, so dass eine hier nicht gezeigte, die Kettenführung 50 s-förmig durchlaufende Kette gespannt wird. Die Kettenführungsanordnung 50 umfasst ein oberes und ein unteres Kettenführungsröllchen 51, 52, die jeweils zwischen zwei Käfighälften 57a, 57b drehbar gelagert sind. Das obere Kettenführungsröllchen 51 ist in einem oberen Abstand von der Achse P um die obere Drehachse 55 drehbar angeordnet. Das untere Kettenführungsröllchen 56 ist in einem unteren Abstand von der P-Achse um die untere Drehasche 56 drehbar angeordnet, wobei das obere Kettenführungsröllchen 51 in einem kleineren Abstand von der P-Achse als das untere Kettenführungsröllchen 52 angeordnet ist. Das bewegliche Element 40 weist ein Arretierungselement 42 auf, das es erlaubt, die vorgespannte Kettenführungs-anordnung 50 gegenüber dem beweglichen Element 40 festzulegen. So kann das Schaltwerk 20 montiert werden, ohne dass die Kettenführungsanordnung 50 aufgrund der Vorspannung nach hinten schnappt.

Beim Schalten auf ein kleineres Ritzel dreht sich die Kettenführungsanordnung 50 um die Drehachse P des beweglichen Elements 40 im UZS nach hinten. Umgekehrt dreht sich die Kettenführungsanordnung 50 beim Schalten auf ein nächstgrößeres Ritzel um die Drehachse P gegen den UZS nach vorne. Durch die Drehbewegung um die Achse P, wird das obere Kettenführungsröllchen 51 radial auf die Ritzel zu- oder wegbewegt. In axialer Richtung wird die Kettenführungsanordnung 50 bewegt, indem die Schwenkarme 35, 36 um die Schwenkachsen 31, 32, 33, 34 verschwenkt werden. Je nach Schaltrichtung bewegt sich das obere Kettenführungsröllchen 51 zusammen mit der gesamten Kettenführungsanordnung 50 in axialer Richtung nach innen oder außen.

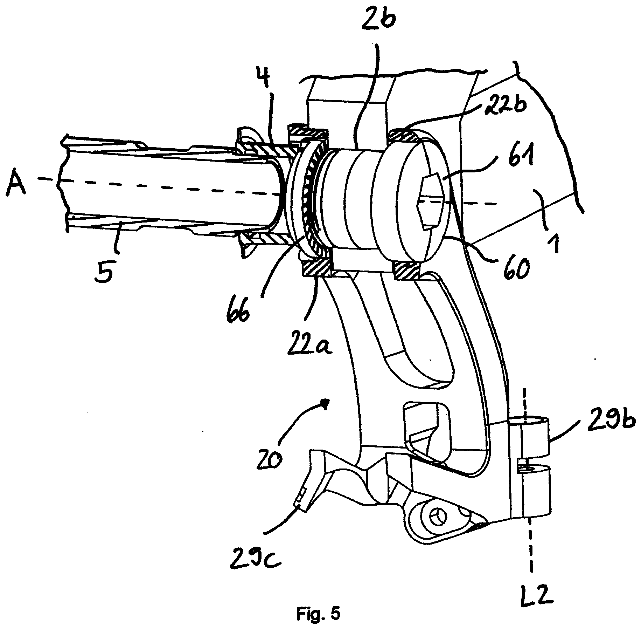

Figur 4 und 5 zeigen jeweils perspektivische Teilschnitte des mit Hilfe des Adapters 60 am Rahmen 1 montierten Basiselements 20 und Teile der Nabenanordnung. Der erste Arm 22a und der zweite Arm 22b sind jeweils auf einer Seite des Rahmens 1 positioniert. Zur Montage des hier nicht gezeigten Hinterrads wird dieses zusammen mit der Nabenanordnung (hier ist nur die Hohlachse 5 gezeigt) und die Nabenendkappe 4 entlang der Nabenführung 27 auf der Innenseite des Basiselements 20 geführt. Die Nabenführung 27 ist als Bund mit aufeinander zulaufenden Führungsflächen ausgebildet. Die Nabenendkappe 4 liegt in ihrer Endposition radial an der Nabenführung 27 an. In axialer Richtung stößt die Nabenendkappe 4 gegen die axiale Nabenanschlagsfläche 26 auf der Innenseite des Basiselements 20. Die Nabenendkappe 4 ist geschnitten dargestellt.

Figur 5 zeigt einen Schnitt durch das Basiselement 20 mit den zwei den Adapter 60 umgreifenden Armen 22a, 22b. Der Adapter 60 besteht aus dem Bolzen 61 und der Mutter 66. Der Bolzen 61 wird in die Mutter 66 eingeschraubt, so dass der Bolzenkopf 62 und die Mutter 66 am Rahmen 1 geklemmt werden. Der Adapter 60 ist so gegenüber dem Rahmen 1 festlegbar. Das Basiselement 20 ist auf dem Adapter 60 zentriert. In fahrbereitem Zustand, bei festgezogener Steckachse 7, ist das Basiselement 20 zwischen der Nabenendkappe 4 und dem Adapter 60 drehfest geklemmt. Das Basiselement 20 liegt in fertig montiertem Zustand in axialer Richtung nur an der Nabenendkappe 4 und am Adapter 60 an. Das Basiselement 20 ist indirekt über den Adapter 60 am Rahmen 1 montiert. Das Basiselement 20 und damit das gesamte Schaltwerk 10 ist an der Nabe 4 referenziert - und nicht wie üblich am Rahmen 1.

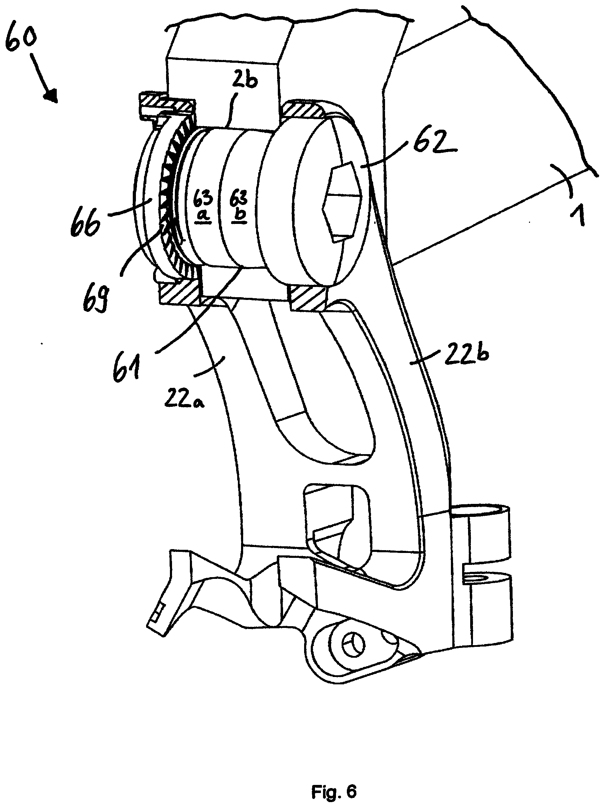

Figur 6 zeigt den vergrößerten Teilschnitt des mit dem Adapter 60 am Rahmen 1 montierten Basiselements 20 aus Figur 5. Der Bolzenkopf 62 und die Mutter 66 sind größer als die Rahmenöffnung 2b bemessen. Wenn der Adapter 60 festgezogen ist, liegen der Bolzenkopf 62 und die Mutter 66 reibschlüssig am Rahmen 1 an. Die Mutter 66 weist eine Rändelfläche 69 auf, um zusätzlich eine formschlüssige Verbindung zum Rahmen 1 herzustellen und einem Verdrehen des Schaltwerks 10 nach vorne (gegen den UZS) entgegenzuwirken. Der Bolzenkörper 63 hat einen Anlagebereich 63a, der an der Rahmenöffnung 2b mit wenig Spiel anliegt und einen Ausgleichsbereich 63b, der gegenüber der Rahmenöffnung 2b mehr Spiel hat. Der Ausgleichsbereich 63b ermöglicht, dass sich der Adapter 60 in der Rahmenöffnung 2b entlang der Achse A ausrichtet. Der Bolzen 61 hat in der Rahmenöffnung 2b Spiel und kann darin etwas verkippen, falls die Rahmenöffnung nicht genau mit der Achse A fluchtet.

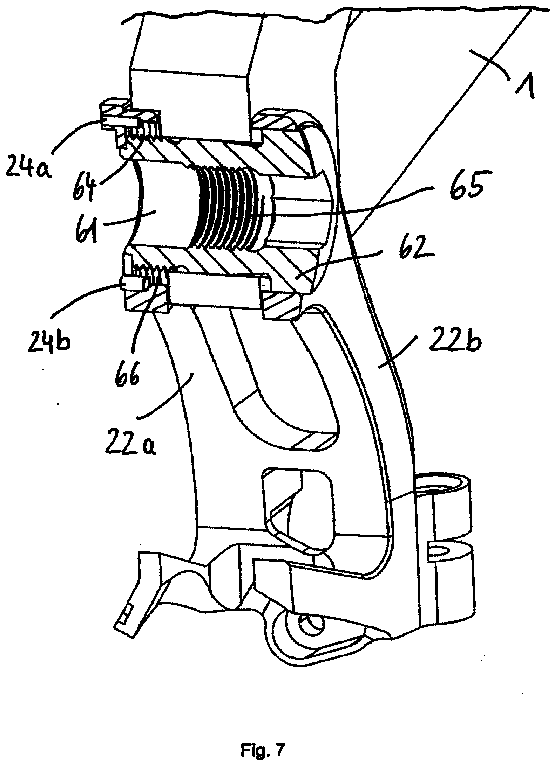

Figur 7 zeigt die Anordnung aus Figur 6 mit geschnittenem Adapter 60. Der Adapter 60 hat zwei Aufgaben: 1) Die Klemmung am Rahmen 1 wird durch die Schraubverbindung zwischen Bolzen 61 und Mutter 66 hergestellt. Alternativ könnte auch die Mutter außen und der Bolzen innen angeordnet sein. Wichtig ist, dass der Adapter 60 gegenüber dem Rahmen 1 festlegbar ist und auf diesen in axialer Richtung anpassbar ist. Bei einem dünneren Rahmen wird die Schraubverbindung weiter angezogen als bei einem dickeren Rahmen. 2) Der Adapter 60 ist gegenüber dem Basiselement 20 im UZS nur begrenzt verdrehbar und stellt damit eine Verdrehsicherung dar. Dazu sind an der Mutter 66 zwei Anschläge 68a, 68b angeordnet, die mit zwei Stiften 24a, 24b am Basiselement 20 zusammenwirken. Eine Verdrehung des Schaltwerks 10 nach vorne (gegen UZS) ist aufgrund der Verdrehsicherung zwischen Adapter 60 und Basiselement 20 nur begrenzt möglich. Die Verdrehsicherung ersetzt die übliche B-Schraube und schützt vor einem ungewollten Verdrehen des Schaltwerks nach vorne.

Das Außengewinde 64 und das Innengewinde 65 des Bolzens 61 sind in verschiedenen Bereichen entlang des Bolzens 61 angeordnet, um so Kräfte besser aufnehmen zu können. Die Steckachse 7 wird in das Innengewinde 65 eingeschraubt und zieht den Adapter 60, insbesondere den Bolzenkopf 62, gegen die Außenseite des Rahmens 1. Im gezeigten Ausführungsbeispiel ist eine Unterlegscheibe zwischen dem Bolzenkopf 62 und dem Rahmen 1 angeordnet.

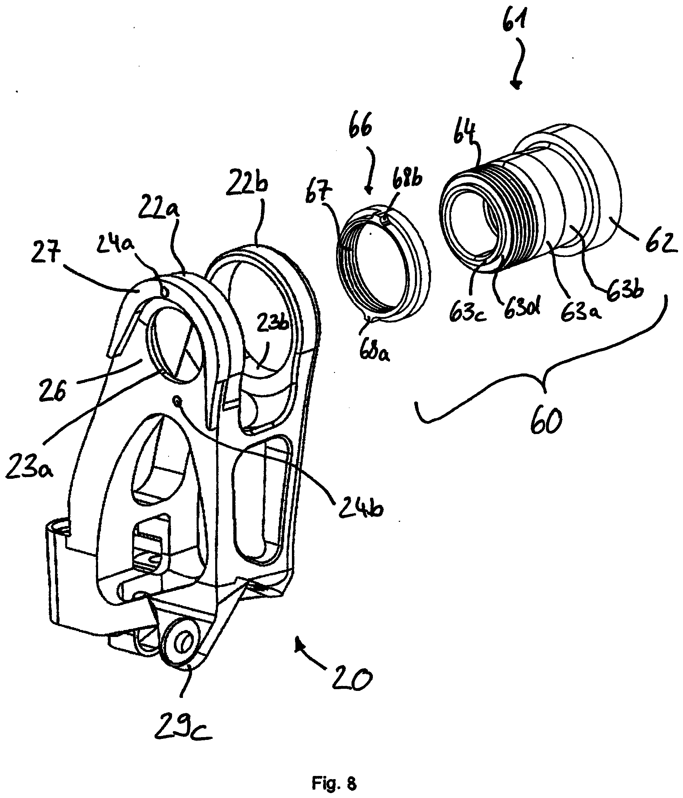

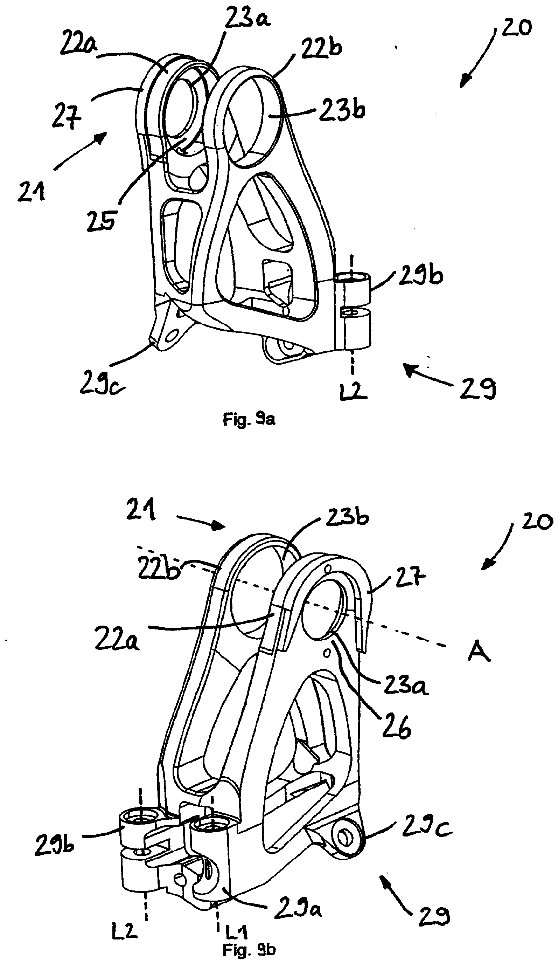

Vergleiche hierzu auch Figur 8, eine Explosionsdarstellung des nicht montierten Basiselements 20 und des Adapters 60 aus Figur 7. In dieser Ansicht ist das Innengewinde 67 der Mutter 66 und das Außengewinde 64 des Bolzens 61, die zusammen die Schraubverbindung des Adapters 60 bilden, gut zu erkennen. Alternativ könnte der Bolzen auch direkt in ein Gewinde der Rahmenöffnung eingeschraubt werden. Dann würden sich Rahmentoleranzen aber direkt auf das Schaltwerk auswirken, was es zu vermeiden gilt. Weiterhin ist der auf die erste Zentrieröffnung 23a abgestimmte Bolzenfuß 63c und der auf die zweite Zentrieröffnung 23b abgestimmte Bolzenkopf 62 zu sehen. Die Anschlagsfläche 63d des Bolzens 61 wirkt mit der hier abgewendeten Außenseite des ersten Arms 22a des Basiselements 20 zusammen (vgl. Figur 9a).

Figur 9a und 9b zeigen eine perspektivische Außen- und Innenansicht des Basiselements 20 mit der ersten und zweiten Zentrieröffnung 23a, 23b. Die erste Zentrieröffnung 23a ist auf den Außendurchmesser des Bolzenfußes 63c des Bolzens 61 abgestimmt. Die zweite Zentrieröffnung 23b ist auf den Außendurchmesser des Bolzenkopfes 61 abgestimmt. Auf der Außenseite des ersten Arms 22a ist die Adapteranschlagsfläche 25 zu sehen, die mit der Anschlagsfläche 63d des Bolzens 61 zusammenwirkt. Auf der gegenüberliegenden Innenseite des ersten Arms 22a ist die Nabenanschlagsfläche 26 angeordnet. In fahrbereitem Zustand wird der Bolzen 61 mit der Bolzenanschlagsfläche 63d gegen die Außenseite und die Nabenendkappe 4 gegen die Innenseite des Basiselements 20 geklemmt. Am unteren Anschlussende des Basiselements 20 befindet sich die Anschlussstelle 29c für eine Seilumlenkung 11. Des Weiteren befinden sich am unteren Anschlussende des Basiselements 20 die erste Aufnahme 29a für die erste Schwenkachse 31 und die zweite Aufnahme 29b für die zweite Schwenkachse 32 des hier nicht gezeigten Schwenkmechanismus 30. Die Längsachsen L1, L2 der ersten und zweiten Aufnahmen 29a, 29b verlaufen in Ebenen, die die Hinterradachse A jeweils im rechten Winkel schneiden. Die vier Schwenkachsen 31, 32, 33, 34 des Parallelogramm-Viergelenks 30 sind also unabhängig von der gewählten Relativstellung des Schaltwerks 10 orthogonal zur gemeinsamen Ritzelachse A ausgerichtet.

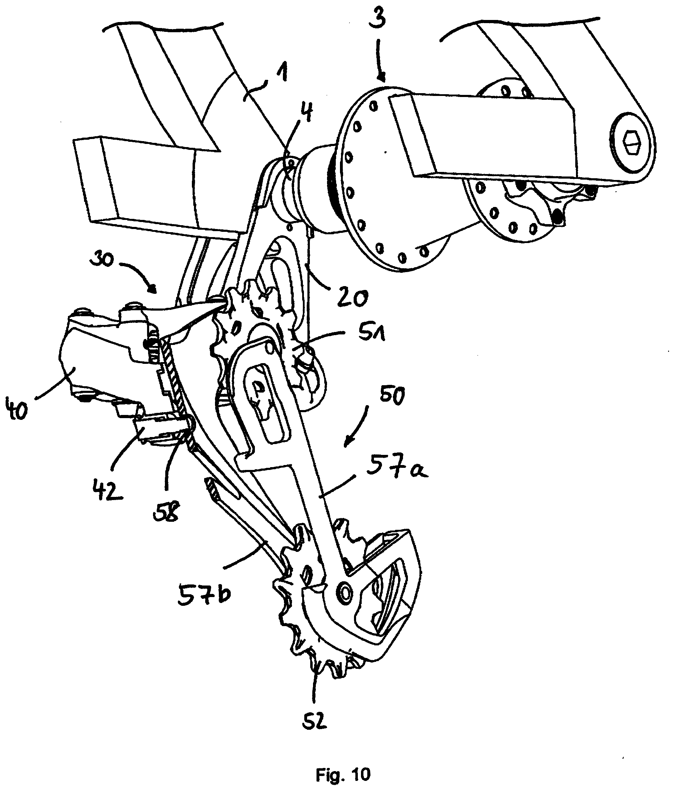

Figur 10 zeigt einen Teilschnitt durch die zweite Ausführungsform des erfindungsgemäßen Schaltwerks 10 mit einer Einstellhilfe. Der Schnitt verläuft durch das bewegliche Element 40 und die Kettenführungsanordnung 50. Die Einstellhilfe ist in Form des Arretierungselements 42 ausgebildet, das in die Arretierungsöffnung 58 in der äußeren Käfighälfte 57b eingreift. Mittels der Einstellhilfe wird die im UZS vorgespannte Kettenführungsanordnung 50 gegenüber dem beweglichen Element 40 in einer vorbestimmten Drehposition festgelegt. Die vorbestimmte Dreh- oder Winkelposition legt das obere Kettenführungsröllchen 51 in einem idealen Abstand zu einem Referenzritzel des hier nicht gezeigten Ritzelpakets fest. Zum Einstellen des Schaltwerks 10 wird dieses mittels der Einstellhilfe arretiert. Nach dem Einstellen wird die Arretierung gelöst, so dass sich die Kettenführungsanordnung 50 relativ zum beweglichen Element 40 drehen kann.

Im Folgenden werden die Montageschritte und die Einstellung des erfindungsgemäßen Schaltwerks 10 mit Bezugnahme auf die Figuren 1 bis 10 beschrieben.
i) Das Schaltwerk 10 wird mittels des Basiselements 20 und dem Adapter 60 am Rahmen 1 vormontiert. Dazu umgreift das Basiselement 20 das rechte Ausfallende des Rahmens 1 und der Adapter 60 wird in die Rahmenöffnung 2b und die Zentrieröffnungen 23a, 23b in das Basiselement 20 eingesetzt und verschraubt. Der Adapter 60 wird soweit verschraubt, dass er zusammen mit dem Basiselement 20 noch drehbar am Rahmen 1 gehalten wird (vgl. Figuren 6 und 7). Nach dem ersten Montageschritt sind der Adapter 60 und das Basiselement 20 in axialer und radialer Richtung gegenüber dem Rahmen 1 vorpositioniert aber noch nicht festgezogen. Adapter 60 und Basiselement 20 sind gegenüber dem Rahmen 1 um die Achse A drehbar.
ii) Das Hinterrad mit der gesamten Nabenanordnung wird eingesetzt und die Steckachse 7 eingeschraubt aber noch nicht ganz festgezogen (vgl. Figuren 1 bis 3, ohne Darstellung des Hinterrads). Im noch nicht festgezogenen Zustand lässt sich das Schaltwerk 10 noch um die Hinterradachse A drehen.
iii) Der Adapter 60 wird angezogen. Dabei wird der Bolzen 61 solange mit der Mutter 66 im UZS gegenüber dem Basiselement 20 gedreht, bis die Anschläge 68a, 68b der Mutter 66 auf die Gegenanschläge 24a, 24b des Basiselements 20 treffen. Aufgrund der Anschläge wird das Basiselement 20 und das gesamte Schaltwerk 10 beim Weiterdrehen solange mitgenommen, bis die Kette gespannt ist. In der gespannten Position ist sowohl das Basiselement 20, als auch die Mutter 66 festgelegt, so dass sich der Bolzen 61 solange in das Innengewinde 67 der Mutter 66 schraubt, bis sich der Adapter 60 am Rahmen 1 festgezogen hat. Optional kann eine Einstellhilfe zum Einsatz kommen. Denkbar wäre eine Einstellarretierung, wie sie in Figur 10 gezeigt ist. Die Arretierung 42/58 legt die um die Achse P drehbare Kettenführungsanordnung 50 in einer bestimmten Winkelposition fest und gibt damit den gewünschten Abstand zwischen dem oberen Kettenröllchen 51 und einem Referenzritzel vor. Dazu wird das Schaltwerk 10 in einen Referenzgang bzw. auf ein Referenzritzel geschalten, die Ketten-führung 50 arretiert und das Basiselement 20 zusammen mit dem gesamten Schaltwerk 10 soweit um die Hinterradachse A nach hinten verdreht, bis die ideale Kettenspannung erreicht ist.
iv) In der eingestellten Position wird die Steckachse 7 festgezogen und die Arretierung gelöst. Durch das Festziehen der Steckachse 7 wird der innere Arm 22a zwischen der Nabenendkappe 4 und dem Adapter 60 verklemmt. Dadurch richtet sich der Arm 22a zusammen mit dem gesamten Basiselement 20 und dem Schaltwerk 10 orthogonal zur Nabenendkappe 4 bzw. zur Hinterradachse A aus. Eventuelle Rahmentoleranzen spielen für diese Ausrichtung keine Rolle mehr. Diese einfache Einstellung ist nur aufgrund der koaxialen Montage des Schaltwerks 10 mit der Drehachse A und des daraus resultierenden, gleich-bleibenden Abstands zwischen einem Referenzritzel und der arretierten, oberen Kettenrolle 51 möglich. Bei einem nicht koaxial montierten Schaltwerk RD würde sich der Abstand zwischen der oberen Kettenrolle und einem Referenzritzel bei einer Drehung um die von der Hinterradachse A beabstandete B-Achse des Basiselements verändern (vgl. Figur 13).
   Bei festgezogener Steckachse 7 ist das Basiselement 20 gegenüber dem Rahmen 1 auch rotatorisch fixiert. Lediglich der Schwenkmechanismus 30, das bewegliche Element 40 und die Kettenführungsanordnung 50 des Schaltwerks 10 bewegen sich beim Schalten noch relativ zum Rahmen 1. Bei der Demontage wird die Steckachse 7 gelöst, so dass sich das Schaltwerk 10 wieder nach hinten drehen lässt und das Hinterrad entnommen werden kann.

Figur 11 und 12 zeigen dritte Ausführungsbeispiele des erfindungsgemäßen Schaltwerks 10 mit Begrenzungsanschlägen 59a und 59b, die es ermöglichen, auf die üblichen Begrenzungsschrauben 70 (limit screws) zu verzichten. Zur Verdeutlichung sind die Begrenzungsschrauben 70 in Figur 12 noch dargestellt.

Das Schaltwerk 10 in Figur 11 ist mit dem größten Ritzel R12 des Ritzelpakets R ausgerichtet. Diese Position stellt die innere Maximalposition dar. Das Schaltwerk 10 soll sich in axialer Richtung nicht weiter nach innen bewegen. Dafür ist der erste Begrenzungsanschlag 59a auf der Kettenführungsanordnung 50, insbesondere auf der Innenseite der äußeren Käfighälfte 57b angeordnet. Der erste Begrenzungsanschlag 59a ist so ausgebildet, dass er mit dem größten Ritzel R12 zusammenwirkt. Dazu ragt der innere Begrenzungsanschlag 59a im Bereich der P-Achse über den Käfig 57b hinaus und stößt in der inneren Maximalstellung gegen die Außenseite des Ritzels R12. Die Kettenführungsanordnung 50 kann dann gegenüber dem größten Ritzel R12 in axialer Richtung nicht weiter nach innen bewegt werden.

Mit anderen Worten erstreckt sich die äußere Käfighälfte 57b der Kettenführungsanordnung 50 in der inneren Maximalposition des Schaltwerks 10 in radialer Richtung in einen Bereich des größten Ritzels R12, welcher sich innerhalb des radialen Außendurchmessers des größten Ritzels R12 befindet. In axialer Richtung erstreckt sich die äußere Käfighälfte 57b in der inneren Maximalposition des Schaltwerks 10 zwischen dem größten Ritzel R12 und seinem benachbarten nächstkleineren Ritzel R11. In der inneren Maximalposition des Schaltwerks 10 befindet sich eine hier nicht gezeigte Kette in Eingriff mit dem größten Ritzel R12. Wird das Schaltwerk 10 über die innere Maximalposition hinweg weiter in axialer Richtung nach innen bewegt, stößt die äußere Käfighälfte 57b bzw. der innere Begrenzungsanschlag 59a gegen das größte Ritzel R12 und begrenzt damit die Bewegung des Schaltwerks 10. Der innere Begrenzungsanschlag 59a ist hier einstückig mit der äußeren Käfighälfte 57b ausgebildet. Mehrteilige Ausführungen von Käfig und Begrenzungsanschlag sind ebenfalls denkbar.

Alternativ kann anstelle der Käfiganordnung auch das bewegliche Element (P-Knuckle) derart ausgebildet sein, dass es in der vorgesehenen, inneren Maximalposition des Schaltwerks als innerer Begrenzungsanschlag wirkt. Der innere Begrenzungsanschlag wirkt mit dem Ritzelpaket, insbesondere einem Ritzel oder einem anderen dem Ritzelpaket zugeordneten geeigneten Element, zum Beispiel einer Kettenschutzscheibe zusammen.

In Figur 12 ist das Schaltwerk 10 mit dem kleinsten Ritzel R1 des Ritzelpakets R ausgerichtet. Im Vergleich zu Figur 11 ist die Kettenführungsanordnung 50 viel weiter nach hinten (im UZS) gedreht. Das obere Kettenführungsröllchen 51 ist in radialer Richtung etwa gleich weit vom Ritzel R1 entfernt, wie in Figur 12 vom Ritzel R12. Die gezeigte Position stellt die äußere Maximalposition des Schaltwerks 10 dar. Das Schaltwerk 10 soll sich in axialer Richtung nicht weiter nach außen bewegen. Dafür ist der zweite Begrenzungsanschlag 59b auf der Kettenführungsanordnung 50, insbesondere der Außenseite der äußeren Käfighälfte 57b angeordnet. Der zweite Begrenzungsanschlag 59a ist so ausgebildet, dass er mit dem Basiselement 20 zusammenwirkt. Genauer gesagt wirkt die Außenseite der äußeren Käfighälfte 57b im Bereich der oberen Kettenführungsrolle 51 als zweiter Begrenzungsanschlag 59b. Der zweite Begrenzungsanschlag 59b stößt in der äußeren Maximalposition gegen die Innenseite des Basiselements 20. Die Innenseite des Basiselements 20 ist gleichzeitig die Innenseite des ersten Arms 22a. Die Kettenführungsanordnung 50 kann dann gegenüber dem Basiselement 20 in axialer Richtung nicht weiter nach außen bewegt werden.

Vorteilhaft an den Begrenzungsanschlägen 59a, 59b ist, dass diese festen Anschläge nicht mehr eingestellt werden müssen, sondern bereits auf das Ritzelpaket R abgestimmt sind. Die Begrenzungsschrauben 70 zum Einstellen der Anschläge sind nicht mehr nötig.

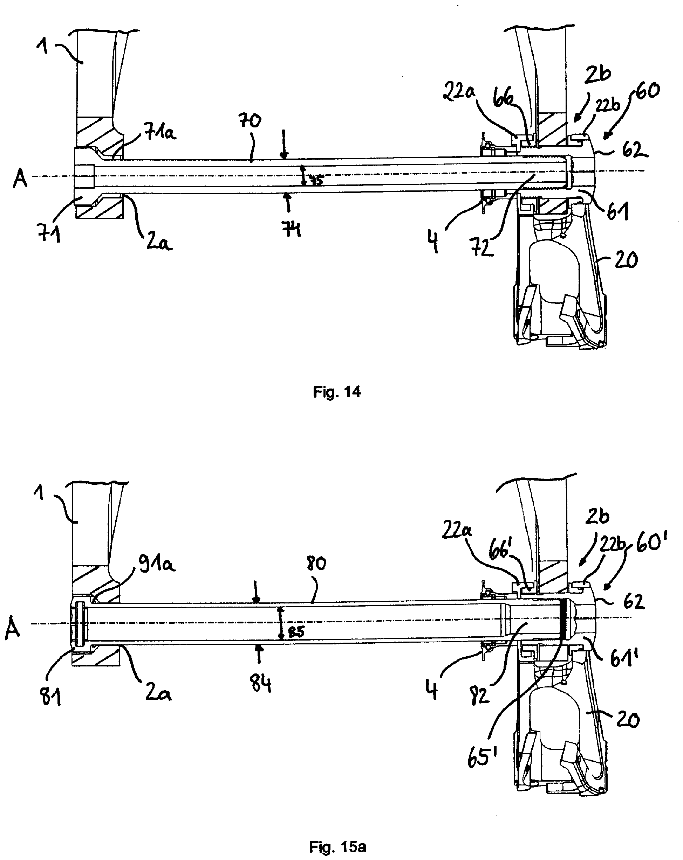

Gerade in Verbindung mit dem in Figur 11 und 12 dargestellten Ritzelpaket R mit einer hohen Anzahl von zwölf Ritzeln R1-R12 und einer großen Spreizung von hier zehn Zähnen auf dem kleinsten Ritzel R1 und 50 Zähnen auf dem größten Ritzel R12, sind die Vorteile des erfindungsgemäßen Schaltwerks 10 besonders groß. Figur 14 zeigt eine Schnittdarstellung eines vierten Ausführungsbeispiels entlang der Achse A in der Rückansicht. Aus Gründen der besseren Übersicht sind in dieser Darstellung nur der Rahmen 1, die Steckachse 70, die rechte Nabenendkappe 4 und ausgewählte Teile des Schaltwerks gezeigt. Alle zu sehenden Teile sind geschnitten dargestellt.

Das Basiselement 20 ist mittels des Adapters 60 am rechten Ausfallende befestigt. Dazu durchgreift der Bolzen 61 die rechte Rahmenöffnung 2b und wird mit der Mutter 66 verschraubt. Die Steckachse 70 ist mit ihrem ersten Ende 71 in die linke Rahmenöffnung 2a eingesteckt und mit ihrem zweiten Ende 72 in den Bolzen 61 des Adapters 60 eingeschraubt. Der Adapter 60 bzw. der Bolzen 61 dient gleichzeitig als Konter für die Steckachse 70. Wenn die Steckachse 70 angezogen wird, schraubt sie sich weiter in den Bolzen 61 und klemmt diesen gegenüber dem Rahmen 1. Der Außendurchmesser 74 der Steckachse 70 ist kleiner bemessen als die Rahmenöffnung 2a. Der Zwischenraum wird mit einer Buchse 71a ausgeglichen. Das erste Steckachsenende 71 weist einen Kopf mit einem größeren Durchmesser als die Rahmenöffnung 2a auf, und kann nicht durch die Rahmenöffnung 2a rutschen. Der Kopfdurchmesser verringert sich kontinuierlich vom ersten Ende 71 zum Körper oder Schaft der Steckachse 70 hin bis auf den Außendurchmesser 74. Der Übergang verläuft in einem 45 Grad Winkel. Andere Winkelmaße, insbesondere 90 Grad, sind ebenfalls denkbar. Wie in den vorhergehenden Ausführungsbeispielen, ist der innere Arm 22a des Basiselements 20 in axialer Richtung zwischen der rechten Nabenendkappe 4 und dem Bolzen 61 festgelegt. Außerdem wird der innere Arm 22a des Basiselements 20 in radialer Richtung auf dem Zentrierbereich des Bolzens 61 (vgl. Details in Figur 7 und 8) und der äußere Arm 22b auf dem Bolzenkopf 62 zentriert. Die gezeigte Steckachse 70 weist einen Außendurchmesser 74 von 12 mm und einen Innendurchmesser 75 von 7 mm auf. Daraus ergibt sich eine Steckachsenwandstärke von 2,5 mm. Das Ausführungsbeispiel der Steckachse 70 in Figur 14 entspricht im Wesentlichen den vorherigen Figuren, wird hier aber noch einmal direkt einer Steckachse 80 gemäß Figur 15a mit einem vergrößerten Außendurchmesser 84 und einer sich unterscheidenden Zentrierung gegenübergestellt.

Figur 15a zeigt eine Schnittdarstellung eines fünften Ausführungsbeispiels, welches sich aufgrund der Steckachse 80 mit einem vergrößerten Außendurchmesser 84 in mehreren Punkten von der vorherigen Ausführungsform unterscheidet. Die gezeigte Steckachse 80 weist einen Außendurchmesser 84 von 15 mm und einen ersten Innendurchmesser 85 von 12 mm auf. Dies führt zu einer ersten Wandstärke W85 von 1,5 mm. Alle gezeigten Teile sind geschnitten dargestellt.

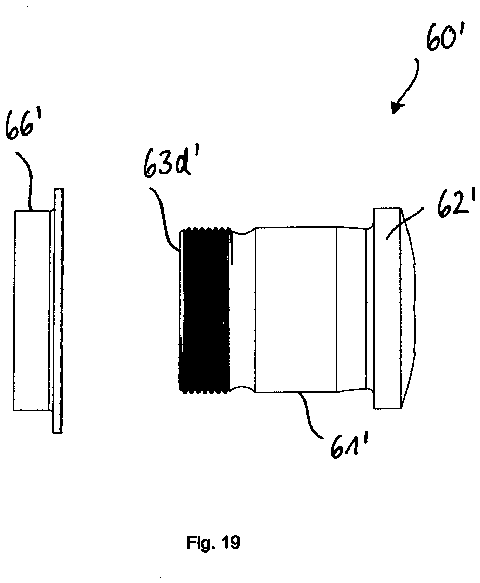

Der Rahmen 1 mit seinen Rahmenöffnungen 2a und 2b, die hier nur teils gezeigte Nabenanordnung mit der Nabenendkappe 4 und das Basiselement 20 des Schaltwerks sind unverändert. Nur der Adapter 60' muss auf den vergrößerten Außendurchmesser 84 der Steckachse 80 angepasst werden. Um die Steckachse 80 aufnehmen zu können, wird der Durchmesser des Innengewindes 65' des Bolzens 61' auf deren Außendurchmesser 84 angepasst. Außerdem fällt der Zentrierbereich (vgl. Zentrierbereich 63c der vorhergehenden Ausführungsformen) am Bolzen 61' weg. Dies führt dazu, dass das Basiselement 20 die äußere Umfangsfläche der Steckachse 80 direkt kontaktiert. Das heißt, der innere Arm 22a des Basiselements 20 zentriert sich direkt auf der Steckachse 80, und nicht wie in den vorherigen Beispielen auf dem Adapter 60. Der äußere Arm 22b des Basiselements zentriert sich unverändert auf dem Außenumfang des Bolzenkopfes 62'. Die Referenzierung des Basiselements 20 in axialer Richtung und in radialer Richtung erfolgt unabhängig vom Rahmen 1. In axialer Richtung ist das Basiselement 20 zwischen Nabenendkappe 4 und dem Adapter 60', insbesondere der Anschlagsfläche 63d' des Bolzens 61' (siehe Figur 19), festgelegt. In radialer Richtung wird der innere Arm 22a des Basiselements 20 direkt auf der Steckachse 80 und der äußere Arm 22b auf dem Adapter 60', insbesondere auf dem Bolzenkopf 62', zentriert. Die weitgehende Unabhängigkeit von Rahmentoleranzen erlaubt eine präzise Ausrichtung des Schaltwerks selbst dann, wenn die beiden Rahmenöffnungen 2a und 2b nicht genau fluchten. Der Übergang zwischen dem Kopf am ersten Ende 81 der Steckachse 80 zum Steckachsenkörper mit dem Außendurchmesser 84 ist hier rechtwinklig. Der Außendurchmesser 84 der Steckachse 80 entspricht in etwa der Rahmenöffnung 2a. Die Steckachse 80 ist mit weniger Spiel durch die Öffnung 2a geführt. Die Buchse 91a weist einen 45 Grad Winkel auf und dient der Zentrierung der Steckachse 80 in der Rahmenöffnung 2a. Auch diese Buchse könnte in einem anderen Winkel ausgebildet sein.

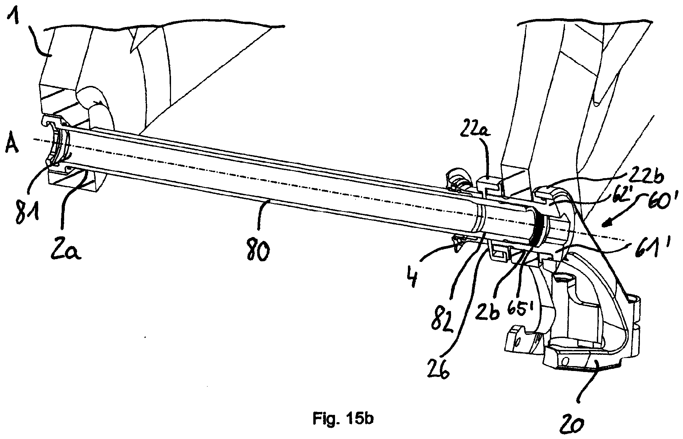

Zur Verdeutlichung zeigt Figur 15b eine perspektivische Außenansicht der Schnittdarstellung aus Figur 15a. Die Nabenendkappe 4 liegt axial an der Nabenanschlagsfläche 26 des Basiselements 20 an.

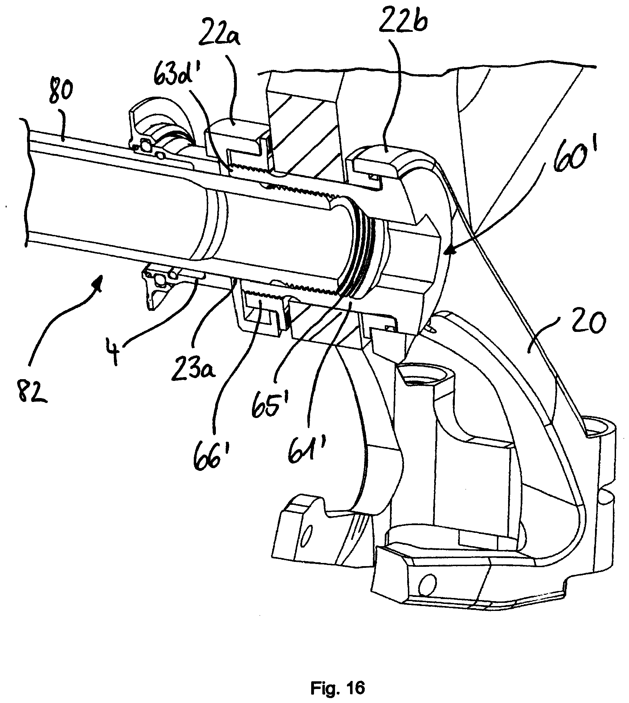

In der Figur 16 ist eine vergrößerte Detailansicht des rechten Ausfallendes des Rahmens 1 aus Figur 15b dargestellt. Das zweite Ende 82 der Steckachse 80 ist in das Innengewinde 65' des Bolzens 61' des Adapters 60' eingeschraubt. Hier wird der direkte Kontakt zwischen Basiselement 20 und Steckachse 80 besonders deutlich. Der innere Arm 22a des Basiselements 20 liegt mit seiner ersten Zentrieröffnung 23a in radialer Richtung direkt auf dem Außenumfang der Steckachse 80 an. In axialer Richtung ist der innere Arm 22a zwischen der Nabenendkappe 4 und der Anschlagsfläche 63d' des Bolzens 61' festgelegt. Die Mutter 66' entspricht im Wesentlichen den vorherigen Ausführungsbeispielen.

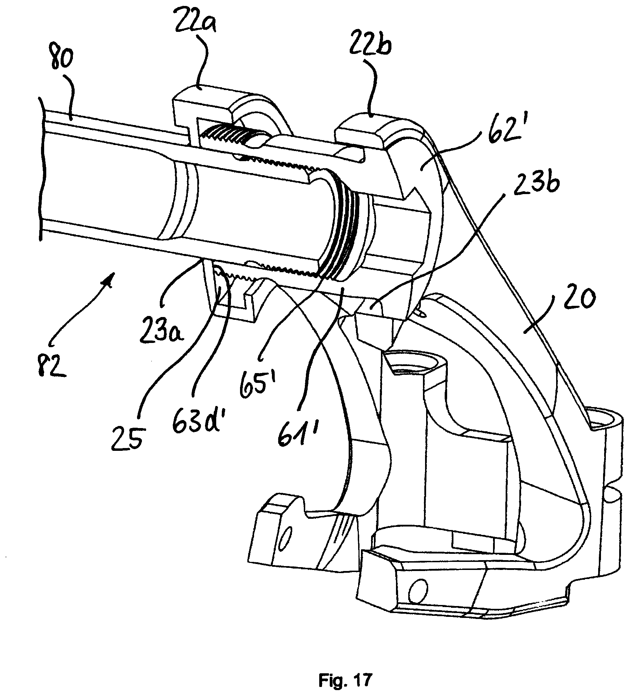

Figur 17 entspricht der Ansicht aus Figur 16, wobei zur besseren Übersichtlichkeit die Nabenendkappe und die Adaptermutter ausgeblendet wurden. Der Bolzen 61' schlägt in axialer Richtung mit seiner Anschlagsfläche 63d' an der Gegenanschlagsfläche 25 des inneren Arms 22a an. Der äußere Arm 22b des Basiselements 20 zentriert sich unverändert mit seiner zweiten Zentrieröffnung 23b auf dem Außenumfang des Bolzenkopfes 62'.

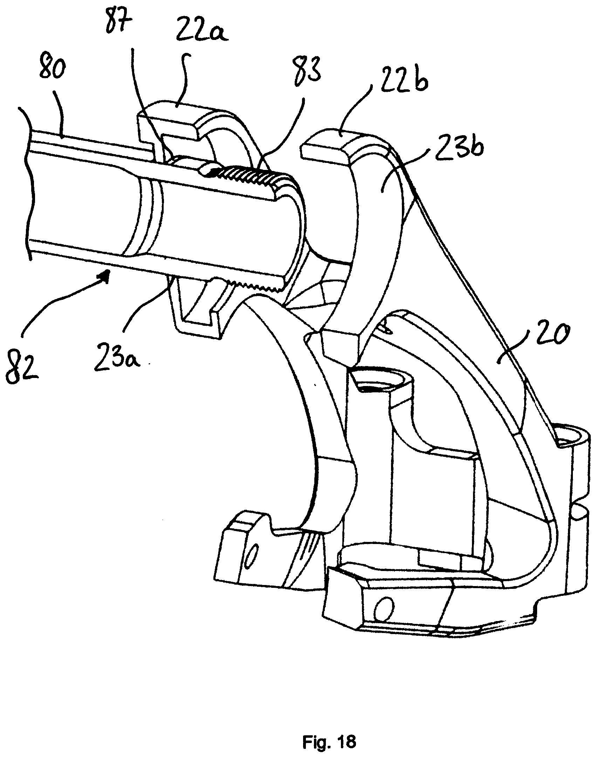

Figur 18 zeigt die Anordnung aus Figur 17 ohne den Bolzen. Hier wird die Zentrierung des Basiselements 20 auf der Steckachse 80 besonders deutlich. Das zweite Ende 82 der Steckachse 20 durchgreift den inneren Arm 22a des Basiselements 20. Das Außengewinde 83 der Steckachse 80 liegt in montiertem Zustand zwischen dem ersten und dem zweiten Arm 22a, 22b des Basiselements 20. Um eine möglichst präzise Zentrierung des Basiselements 20 auf der Steckachse 80 zu erreichen, ist die Oberfläche 87 der Steckachse 80 zumindest im Kontaktbereich zwischen Basiselement 20 und Steckachse 80 bearbeitet. Diese Zentrieroberfläche 87 wird beispielsweise feingedreht, geschliffen und/oder beschichtet. Aufgrund der aufwendigen Bearbeitung wird die Zentrieroberfläche 87 möglichst schmal gehalten. Die Zentrieroberfläche 87 muss jedoch mindestens so breit, wie die erste Zentrieröffnung 23a des ersten Arms 22a des Basiselements 20 sein.

Insbesondere reicht die Zentrieroberfläche 87 der Steckachse 80 in montiertem Zustand zumindest bis in den Bereich des Bolzens 61' hinein, so dass der Bolzenfuß auf der Zentrieroberfläche 87 zum Liegen kommt. Diese Ausführung erlaubt eine genaue Zentrierung des Bolzens 61' auf der Steckachse 80. Die Zentrierung durch das Einschrauben des Außengewindes 83 der Steckachse 80 in das Innengewinde 65' des Bolzens 61' alleine ist aufgrund des Gewindespiels nicht präzise genug. Die Zentrieroberfläche 87 nimmt das Spiel zwischen Bolzen 61' und Steckachse 80 heraus. So ist eine besonders steife Verbindung zwischen der Steckachse 80 und dem Bolzen 61' möglich. Die Zentrieroberfläche 87 sollte eine Mindestbreite aufweisen, damit Toleranzen je nach Einschraubtiefe, abhängig von der Nabenanordnung und Rahmenbreite, ausgeglichen werden können und das Basiselement 20 immer auf der Oberfläche 87 zum Liegen kommt. Eine axiale Breite der Zentrieroberfläche 87 von etwa 2,5 mm (oder mehr) ist ausreichend breit und kann relativ schnell und kostengünstig gefertigt werden.

Eine weitere Zentrieroberfläche könnte am äußersten zweiten Ende der Steckachse angebracht werden, welche ebenfalls mit dem Bolzen zusammenwirkt und zu einer noch steiferen Verbindung führt. Die äußere Oberfläche von besonders hochwertigen Steckachsen könnte auch vollständig nachbearbeitet sein.

Figur 19 zeigt eine vergrößerte Explosionsdarstellung in der ungeschnittenen Rückansicht des Adapters 60', bestehend aus dem Bolzen 61' und der Mutter 66'. Der Adapter 60' entspricht im Wesentlichen dem Adapter 60 des vorhergehenden Ausführungsbeispiels in den Figuren 1 bis 12, weshalb hier nur noch auf die Unterschiede eingegangen wird. Das in seinem Durchmesser vergrößerte und auf die 15 mm Steckachse 80 angepasste Innengewinde ist in der Rückansicht nicht sichtbar. Der Anschlag 63d' bildet das innere axiale Ende des Bolzens 61'. Die übrigen Außenmaße des Bolzens 61' sind unverändert und auf das Basiselement 20 abgestimmt.

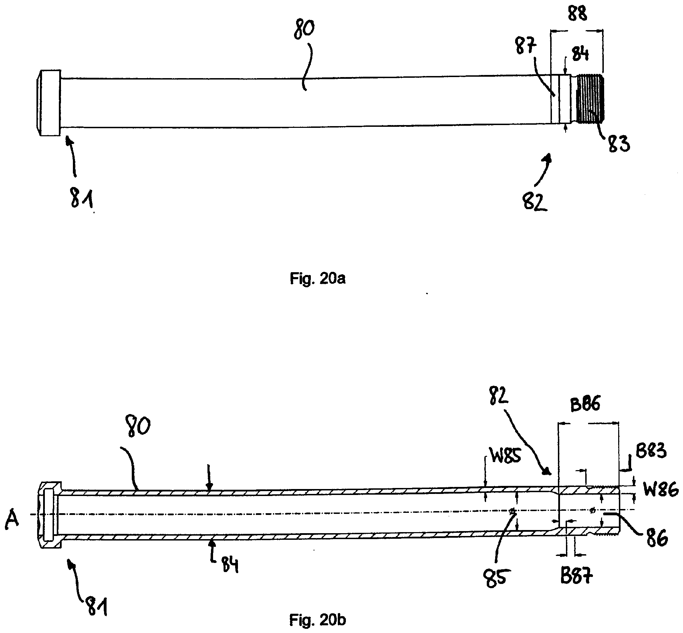

Eine Steckachse 80 gemäß des fünften Ausführungsbeispiels ist in einer ungeschnittenen Rückansicht in Figur 20a und in einer Schnittansicht entlang der Achse A in Figur 20b gezeigt. Die Steckachse 80 weist einen Außendurchmesser 84 von 15 mm auf. Die axiale Gesamtbreite vom ersten Ende 81 bis zum zweiten Ende 82 variiert je nach verwendetem Nabenstandard und den Rahmenbedingungen. Typische Nabenbreiten von linker bis rechter Nabenendkappe liegen bei 142 bis 148 mm. Das Außengewinde 83 und die Zentrieroberfläche 87 sind im Bereich des zweiten Steckachsenendes 82 angeordnet. Die Zentrieroberfläche 87 liegt axial weiter innen als das Außengewinde 83. Die Zentrieroberfläche 87 beginnt in einem Abstand 88 von etwa 13,5 mm und endet in einem Abstand 88 von etwa 16 mm vom zweiten Steckachsenende 82. Die Zentrieroberfläche 87 hat eine axiale Breite B87 von etwa 2,5 mm. Die axiale Breite B83 des Außengewindes 83 misst etwa 10 mm.

Die Steckachse 80 weist einen Außendurchmesser 84 von 15 mm auf. Lediglich das erste Ende 81 hat einen größeren Kopfdurchmesser. Ein erster Innendurchmesser 85 der Steckachse 80 beträgt 12 mm. Daraus ergibt sich eine erste Wandstärke W85 von etwa 1,5 mm. Die erste Wandstärke W85 erstreckt sich über einen Großteil der axialen Breite der Steckachse 80. Im Bereich des zweiten Steckachsenendes 82 weist sie einen zweiten Innendurchmesser 86 auf, der etwa 10 mm beträgt. Der zweite Innendurchmesser 86 ist kleiner als der erste Innendurchmesser 85. Aus dem zweiten Innendurchmesser 86 ergibt sich eine zweite Wandstärke W86, die größer als die erste Wandstärke W85 ist. Im gezeigten Ausführungsbeispiel ist die zweite Wandstärke W86 mit etwa 2,4 mm bemessen. Der zweite Innendurchmesser 86 beziehungsweise die vergrößerte zweite Wandstärke W86 ist gerade in den Bereichen der Steckachse 80 angeordnet, die stark belastet werden. Insbesondere im Bereich des Außengewindes 83. Auch der Bereich der Zentrieroberfläche 87 weist eine vergrößerte Wandstärke W86 auf, weil hier das Basiselement 20 auf der Steckachse 80 aufliegt und entsprechend größere Kräfte wirken. Der Übergang zwischen dem ersten und zweiten Innendurchmesser W85, W86 ist kontinuierlich. Der zweite Innendurchmesser 86 erstreckt sich vom äußersten zweiten Steckachsenende 82 in axialer Richtung über eine Breite B86 von etwa 18 mm.

Vom ersten Ende 81 bis zum zweiten Ende 82 der Steckachse 80 reihen sich folgende Bereiche aneinander: erstes Ende 81 mit vergrößertem Kopfdurchmesser, rechtwinkliger Übergang zum Außendurchmesser 84, erster Innendurchmesser 85 mit der sich daraus ergebenden Wandstärke W85, Übergang vom ersten Innendurchmesser 85 zum zweiten Innendurchmesser 86 mit der sich daraus ergebenden Wandstärke W86, Zentrieroberfläche 87, Außengewinde 86 und zweites Steckachsenende 82.

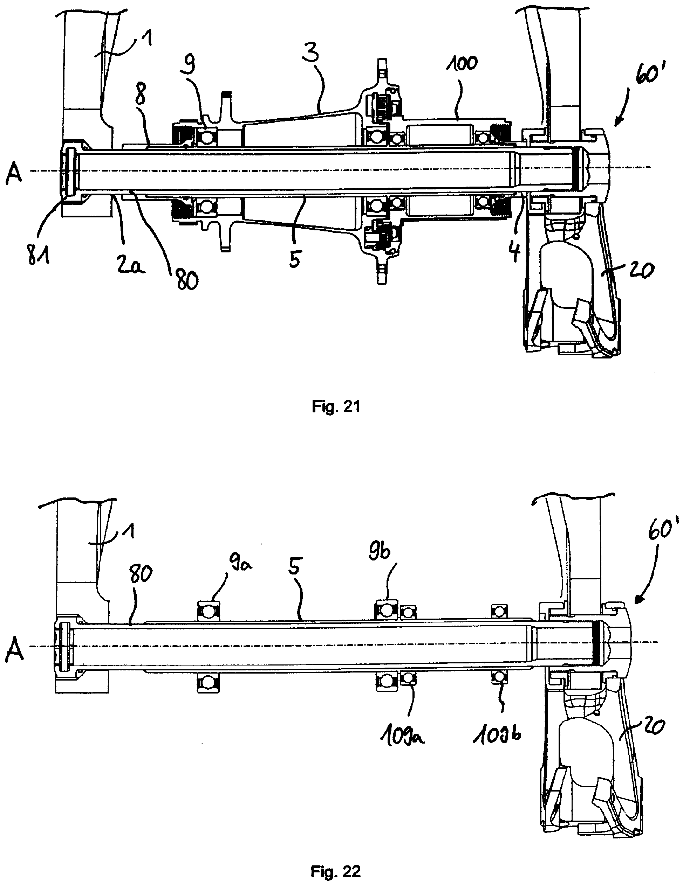

Die Figur 21 zeigt eine Schnittdarstellung einer Hinterradachsanordnung mit einer Steckachse 80 gemäß dem fünften Ausführungsbeispiel. Alle Teile sind geschnitten dargestellt. Die Steckachse 80 durchgreift in montiertem Zustand die Rahmenöffnung 2a, die Nabenanordnung und den Antreiber 100 und ist in das Schaltwerk, insbesondere den Adapter 60' eingeschraubt. Das Schaltwerk (hier nur teilweise gezeigt) wird über das Basiselement 20 und den Adapter 60' am rechten Ausfallende des Rahmens 1 befestigt. Mit der Steckachse 80 wird die Naben-anordnung am Rahmen 1 befestigt. Durch das Eindrehen der Steckachse 80 in das Gewinde des Adapters 60' wird das Basiselement 20 gegen die Nabenanordnung, insbesondere die rechte Nabenendkappe 4 in axialer Richtung verspannt. Wird die Steckachse 80 entfernt, verbleibt das Schaltwerk samt Adapter 60' und Basiselement 20 am Rahmen 1. Die Nabenanordnung umfasst unter anderem die linke Nabenend-kappe 8, die Nabenlagerung 9, die Nabenhülse 3, die Nabenachse 5 und die rechte Nabenendkappe 4.

Figur 22 zeigt ausgewählte Teile der Hinterradachsanordnung aus Figur 21. Zur besseren Übersichtlichkeit wurden hier der Antreiber und die meisten Teile der Nabenanordnung entfernt. Lediglich die Nabenachse 5 und die Nabenlagerung 9, bestehend aus den als Wälzlager ausgebildeten Nabenlagern 9a, 9b der Nabenanordnung sind dargestellt. Die Steckachse 80 ist mit wenig Spiel in die Nabenachse 5 eingesteckt. Die Nabenlager 9a, 9b und die Antreiberlager 109a, 109b sind auf die Nabenachse 5 gesteckt. Alle Teile sind geschnitten dargestellt.

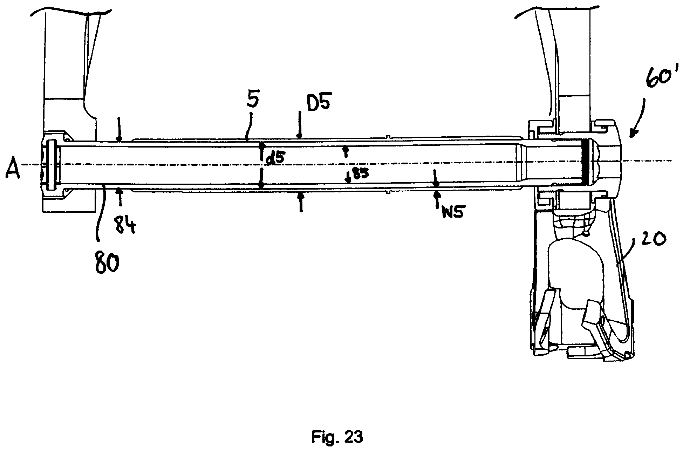

Figur 23 zeigt die Schnittdarstellung der Hinterradachsanordnung aus Figur 22 ohne die Lager. Die Steckachse 80 mit einem Außendurchmesser 84 von 15 mm ist in die Nabenachse 5 mit wenig Spiel eingesteckt. Der Innendurchmesser d5 der Nabenachse 5 beträgt etwas mehr als 15 mm. Der Außendurchmesser D5 der Nabenachse 5 beträgt etwa 17 mm. Daraus ergibt sich eine Wandstärke W5 der Nabenachse 5 von etwa 1 mm. Die Wandstärke W85 der Steckachse 80 ist größer als die Wandstärke W5 der Nabenachse 5. Insbesondere beträgt die Wandstärke W85 der Steckachse 80 etwa 1,5 mm und damit das 1,5-fache der Nabenachse 5. Dies führt zu einem relativ ausgewogenen Verhältnis der Flächenträgheitsmomente.

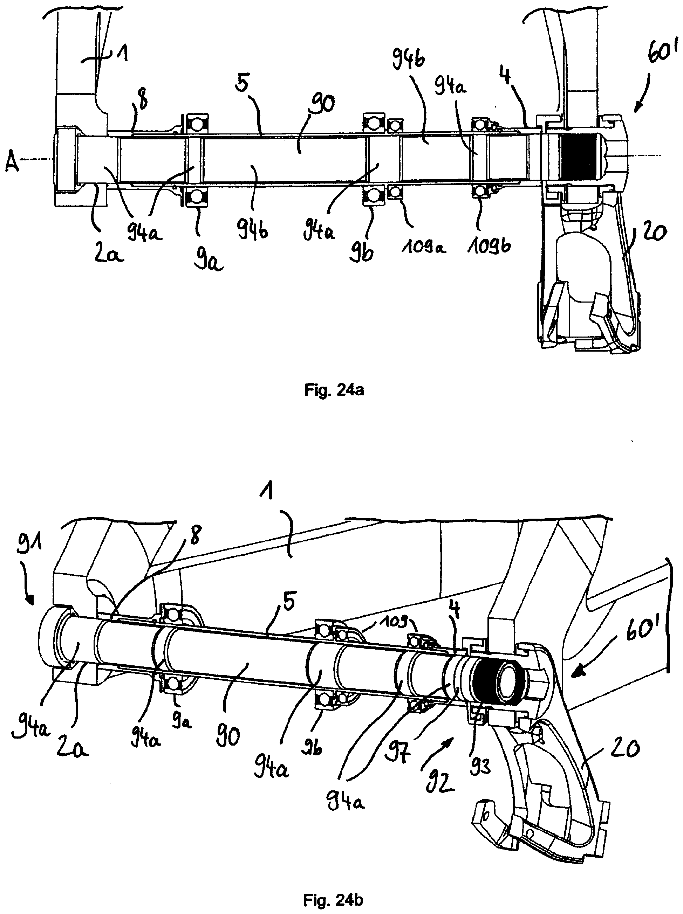

Figur 24a zeigt einen Teilschnitt durch ausgewählte Teile einer Hinterradachsanordnung mit einer Steckachse 90 gemäß dem sechsten Ausführungsbeispiel. Ausgenommen der Steckachse 90 sind alle Teile geschnitten dargestellt. Figur 24b zeigt den Teilschnitt aus Figur 24a in einer perspektivischen Außenansicht. Die Steckachse 90 durchgreift die linke Rahmenöffnung 2a, die Nabenendkappen 8, 4 und die Nabenachse 5 mit geringem Spiel. Das zweite Steckachsenende 92 ist mit dem Außengewinde 93 in den Adapter 60' des Schaltwerks eingeschraubt. Der erste Außendurchmesser 94a der Steckachse 90 ist etwas kleiner als der Innendurchmesser der Nabenachse 5. Die Steckachse 90 weist in den Bereichen mit erhöhter Belastung den ersten Außendurchmesser 94a auf. Dies sind insbesondere die Steckachsenenden 91, 92 und die Bereiche der Lager 9a, 9b, 109a, 109b. Die übrigen Bereiche der Steckachse 90 weisen einen zweiten, reduzierten Außendurchmesser 94b auf.

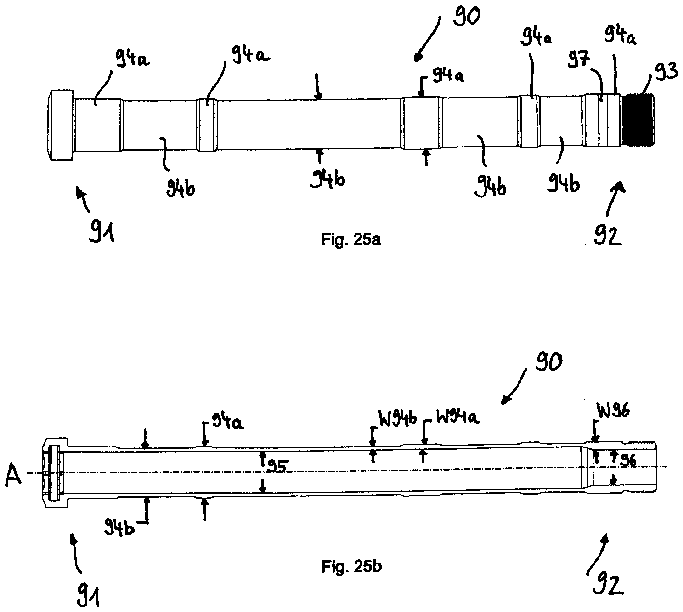

Die Steckachse 90 gemäß der sechsten Ausführungsform ist in einer ungeschnittenen Rückansicht in Figur 25a und in einer Schnittansicht entlang der Achse A in Figur 25b gezeigt.

Die Steckachse 90 unterscheidet sich von der Steckachse 80 in erster Linie dadurch, dass sie zur Gewichtseinsparung in großen Bereichen eine reduzierte Wandstärke W94b aufweist. Die Steckachse 90 weist einen ersten Außendurchmesser 94a von 15 mm und einen ersten Innendurchmesser 95 von 12 mm auf. Der erste Außendurchmesser 94a von 15 mm wurde auf einen zweiten Außendurchmesser 94b von 14 mm reduziert. Der erste Innendurchmesser 95 bleibt unverändert. Daraus ergibt sich im Bereich des ersten Außendurchmessers 94a eine erste Wandstärke W94a von 1,5 mm und im Bereich des reduzierten Außendurchmessers 94b eine zweite, reduzierte Wandstärke W94b von 1 mm. Die Steckachse 90 weist nur in den axialen Bereichen, die einer größeren Belastung unterliegen, den größeren Außendurchmesser 94a und die größere Wandstärke W94b auf.

Wie bei der vorhergehenden Ausführungsform weist die Steckachse 90 im Bereich des zweiten Endes 92 einen zweiten kleineren Innendurchmesser 96 auf, der etwa 10 mm beträgt. Aus dem zweiten Innendurchmesser 96 ergibt sich eine dritte Wandstärke W96, die größer als die erste und die zweite Wandstärke W94a, W94b ist. Der zweite Innendurchmesser 96 bzw. die vergrößerte zweite Wandstärke W96 ist in dem stark belasteten Bereich des Außengewindes 93 und der Zentrieroberfläche 97 angeordnet.

Vom ersten Ende 91 bis zum zweiten Ende 92 der Steckachse 90 reihen sich folgende Bereiche aneinander: erstes Ende 91 mit vergrößertem Kopfdurchmesser, rechtwinkliger Übergang zum ersten Außendurchmesser 94a, erster Innendurchmesser 95 mit der sich daraus ergebenden Wandstärke W94a in den stärker belasteten Bereichen, dazwischen der reduzierte Außendurchmesser 94b mit der sich daraus ergebenden reduzierten Wandstärke W94b, Übergang vom reduzierten Außendurchmesser 94b zum zweiten Innendurchmesser 96 mit der sich daraus ergebenden Wandstärke W96, Zentrieroberfläche 97, Außengewinde 96 und zweites Steckachsenende 92.

Der reduzierte Außendurchmesser 94b kann besonders einfach durch Abdrehen des überschüssigen Materials an der Außenseite der Steckachse 90 hergestellt werden. Alternativ könnte eine reduzierte Wandstärke auch durch einen dritten, vergrößerten Innendurchmesser verwirklicht werden. Dabei wird Material an der Innenseite der Steckachse und nicht an der Außenseite entfernt bzw. eingespart. Der Effekt der Gewichtseinsparung wäre derselbe.

Grundsätzlich ist anzumerken, dass die Steckachsen 80, 90 mit einem vergrößerten Außendurchmesser von 15 mm trotz einer geringeren Wandstärken von 1 mm bis 2 mm ein stark erhöhtes Flächenträgheitsmoments im Vergleich zu der Steckachsen 70 mit einem 12 mm Außendurchmesser aufweisen. Die Steifigkeit wird erhöht und/oder das Gewicht verringert.

Im Vergleich zu herkömmlichen Hinterradachsanordnungen kann mit der Steckachse 80 gemäß dem fünften Ausführungsbeispiel ein etwa 30 % höheres Flächenträgheitsmoment des Gesamtsystems und gleichzeitig ein etwas 21 % geringeres Gewicht erzielt werden.

Ein weiteres hier nicht gezeigtes Ausführungsbeispiel, wie es speziell für E-Bikes zum Einsatz kommen könnte, ist eine Steckachse mit einem Außendurchmesser von 15 mm und einem Innendurchmesser von 11 mm. Im Vergleich zu herkömmlichen Hinterradachsanordnungen für E-Bikes mit einer deutlich größeren Wandstärke wird das Flächenträgheitsmoment zwar etwas verringert, aber deutlich an Gewicht gespart. Zusätzlich führt die gleichmäßigere Verteilung des Flächenträgheitsmoments auf die Steckachse und Nabenachse zu einer insgesamt stabileren Achsanordnung, weil die Maximalspannungen an der Außenhaut der Nabenachse geringer sind.

Ein weiterer Faktor ist die Verteilung von Zug- und Druckspannungen, welche sich mit den Biegespannungen überlagern. Die Zug- und Druckspannungen sind auch abhängig von der Gewindesteigung des Außengewindes der Steckachse. Eine Gewindesteigung von 1 mm Axialbewegung pro Umdrehung hat sich bei einem üblichen Anzugsmoment als vorteilhaft erwiesen. Eine Gewindesteigung 1,5 mm wäre schlechter, weil bei gleichem Anzugsmoment eine geringere Zugspannung in der Steckachse aufgebaut wird. Die Zugspannung in der Steckachse gleicht sich mit der Druckspannung in der Nabenachse aus. Es besteht eine hohe Druckspannung auf der Nabenachse, weil diese eine dünnere Wandstärke bzw. einen kleineren Querschnitt aufweist.

Durch die Auswahl des Materials können sowohl die Steifigkeit, als auch das Gewicht weiter beeinflusst werden. Bevorzugte Materialien für die Steckachse sind Aluminium, Titan oder Stahl.

Das modulare System erlaubt einen einfachen und kostengünstigen Wechsel der Steckachse 70, 80, 90. Je nach Fahrradtyp und Belastung kann entweder eine steifere oder leichtere Steckachse gewählt werden. Lediglich der Adapter 60, 60' muss auf die gewählte Steckachse 70, 80, 90 angepasst werden, Die Nabenanordnung, der Antreiber 100, das Basiselement 20 und die restlichen Teile des Schaltwerks können unverändert genutzt werden und werden vom Wechsel der Steckachse nicht beeinflusst.

Die in den oben beschriebenen Ausführungsbeispielen genannten Wandstärken der Naben- und Steckachsen sind auf eine Fertigung aus Aluminium ausgelegt. Die gemachten Aussagen zum Flächenträgheitsmoment bestehen materialunabhängig fort. Solange für die Steckachse und die Nabenachse dasselbe Material verwendet wird, können die genannten Wandstärkenverhältnisse beibehalten werden. Werden unterschiedliche Materialien für die Nabenachse und die Steckachse verwendet, können die Wandstärken entsprechend der maximalen Spannungen angepasst werden. Beispielsweise könnte eine Steckachse aus Titan und eine Nabenachse aus Aluminium gefertigt werden. Dann könnte die Steckachse entsprechend der zulässigen Streckgrenzen dünnwandiger ausgebildet werden. 30.

## Patentansprüche

1. Hinteres Schaltwerk (10) zur koaxialen Montage an einer Hinterradachse (A) aufweisend:
- ein Basiselement (20),
- einen Schwenkmechanismus (30),
- ein bewegliches Element (40), und
- eine Kettenführungsanordnung (50),
wobei der Schwenkmechanismus (30) das Basiselement (20) mit dem beweglichen Element (40) verbindet, und die Kettenführungsanordnung (50) um eine Drehachse (P) drehbar mit dem beweglichen Element (40) verbunden ist, und
wobei das Basiselement (20) ein erstes Anschlussende (21) zur direkten koaxialen Montage an der Hinterradachse (A) und ein zweites Anschlussende (29) zur direkten Kopplung mit dem Schwenkmechanismus (30) umfasst,
wobei das erste Anschlussende (21) einen ersten Arm (22a) und einen zweiten Arm (22b) aufweist, die in axialer Richtung voneinander beabstandet angeordnet sind, und sich im montierten Zustand der erste Arm (22a) auf einer axialen Innenseite eines Rahmens (1) und der zweite Arm (22b) auf einer axialen Außenseite des Rahmens (1) befindet,
**dadurch gekennzeichnet, dass**
der erste Arm (22a) eine erste Zentrieröffnung (23a) und der zweite Arm (22b) eine zweite Zentrieröffnung (23b) aufweist.

2. Hinteres Schaltwerk (10) nach Anspruch 1,
wobei der erste Arm (22a) auf seiner axialen Außenseite eine Adapteranschlags-fläche (25) aufweist.

3. Hinteres Schaltwerk (10) nach einem der vorhergehenden Ansprüche,
wobei der erste Arm (22a) auf seiner axialen Innenseite eine Nabenanschlagsfläche (26) aufweist.

4. Hinteres Schaltwerk (10) nach einem der vorhergehenden Ansprüche,
wobei der erste Arm (22a) auf seiner axialen Innenseite eine Nabenführung (27) aufweist.

5. Hinteres Schaltwerk (10) nach einem der vorhergehenden Ansprüche,
wobei der erste Arm (22a) eine Achsöffnung (28) zur Durchführung einer Achse, insbesondere einer Steckachse (70, 80, 90), aufweist.

6. Hinteres Schaltwerk (10) nach einem der vorhergehenden Ansprüche,
wobei das Basiselement (20) eine erste Aufnahme (29a) für eine erste Schwenk-achse (31) des Schwenkmechanismus (30) und eine zweite Aufnahme (29b) für eine zweite Schwenkachse (32) des Schwenkmechanismus aufweist, und wobei die erste und zweite Aufnahme (29a, 29b) jeweils orthogonal zur Hinterradachse (A) orientiert sind.

7. Hinteres Schaltwerk (10) nach einem der vorhergehenden Ansprüche,
aufweisend einen Adapter (60), der eine Schraubverbindung, insbesondere einen Bolzen (61) mit einem Außengewinde (64) und eine Mutter (66) mit einem Innengewinde (67) umfasst.

8. Hinteres Schaltwerk (10) nach Anspruch 7,
wobei der Adapter (60), insbesondere der Bolzen (61), eine Achsöffnung aufweist, in der ein Innengewinde (65) angeordnet ist, in welches ein Gegengewinde (73, 83, 93), der Steckachse (7, 70, 80, 90) schraubbar ist.

9. Hinteres Schaltwerk (10) nach einem der Ansprüche 7 oder 8,
wobei ein erster Außendurchmesser des Adapters (60) auf einen Innendurch-messer der ersten Zentrieröffnung (23a) des Basiselements (20) und ein zweiter Außendurchmesser des Adapters (60) auf einen Innendurchmesser der zweiten Zentrieröffnung (23b) des Basiselements (20) abgestimmt ist.

10. Hinteres Schaltwerk (10) nach Anspruch 9,
wobei ein Außendurchmesser eines Bolzenfußes (63c) auf die erste Zentrier-öffnung (23a) und ein Außendurchmesser eines Bolzenkopfes (62) auf die zweite Zentrieröffnung (23b) abgestimmt ist.

11. Hinteres Schaltwerk (10) nach einem der Ansprüche 7 bis 9,
wobei der Adapter (60), insbesondere eine axiale Anschlagsfläche (63d, 63d') des Bolzens (61), an der axialen Adapteranschlagsfläche (25) des Basiselements (20) anliegt.

12. Hinteres Schaltwerk (10) nach Anspruch 3 und einem der vorhergehenden Ansprüche,
**dadurch gekennzeichnet,**
**dass** das Basiselement (20), insbesondere die Nabenanschlagsfläche (26) des ersten Arms (22a), im fahrbereiten Zustand axial an einer Nabenendkappe (4) anschlägt.

13. Hinteres Schaltwerk (10) nach Anspruch 12,
wobei der erste Arm (22a) zwischen der Nabenendkappe (4) und dem Adapter (60) angeordnet ist, insbesondere zwischen der Nabenendkappe (4) und dem Adapter (60) kraftschlüssig festgelegt ist.

14. Hinteres Schaltwerk (10) nach einem der vorhergehenden Ansprüche,
**dadurch gekennzeichnet,**
**dass** der Schwenkmechanismus (30) zumindest eine Schwenkachse (31, 32, 33, 34) umfasst, die orthogonal zur Hinterradachse (A) orientiert ist.

15. Hinteres Schaltwerk (10) nach Anspruch 14,
wobei der Schwenkmechanismus (30) als Parallelogramm-Viergelenk mit vier Schwenkachsen (31, 32, 33, 34) ausgebildet ist, und alle vier Schwenkachsen (31, 32, 33, 34) orthogonal zur Hinterradachse (A) orientiert sind.

16. Hinteres Schaltwerk (10) nach einem der vorhergehenden Ansprüche,
wobei das Schaltwerk (10), insbesondere das bewegliche Element (40), ein Arretierungselement (42) aufweist, welches erlaubt, die vorgespannte Kettenführungsanordnung (50) zum Einstellen des Schaltwerks (10) gegenüber dem beweglichen Element (40) festzulegen.

17. Hinteres Schaltwerk (10) nach einem der vorhergehenden Ansprüche 1 bis 8 oder 11 bis 16,
wobei das erste Anschlussende (21) des Basiselements (20) eine erste Zentrieröffnung (23a) aufweist, welche dazu ausgebildet ist, im fahrbereiten Zustand mit einer Zentrieroberfläche (87, 97) der Steckachse (80, 90) zur Zentrierung des Basiselements (20) auf der Steckachse (80, 90) zusammenzuwirken.

18. Hinteres Schaltwerk (10) nach einem der vorhergehenden Ansprüche,
wobei an dem beweglichen Element (40) oder an der Kettenführungsanordnung (50) ein innerer Begrenzungsanschlag (59a) ausgeordnet ist, der in einer inneren Maximalposition des Schaltwerks (10) zum Zusammenwirken mit einem Ritzelpaket (R) ausgebildet ist, um eine Axialbewegung des Schaltwerks (10) nach innen zu begrenzen.

19. Hinteres Schaltwerk (10) nach einem der vorhergehenden Ansprüche,
wobei an der Kettenführungsanordnung (50) ein äußerer Begrenzungsanschlag (59b) angeordnet ist, der in einer äußeren Maximalposition des Schaltwerks (10) zum Zusammenwirken mit dem Basiselement (20) ausgebildet ist, um eine Axialbewegung des Schaltwerks (10) nach außen zu begrenzen.

20. Eine Anordnung bestehend aus einer Steckachse und einem hinteren Schaltwerk nach einem der vorhergehenden Ansprüche, wobei die Steckachse (80, 90) zum Einschrauben in ein hinteres Schaltwerk (10) nach einem der vorhergehenden Ansprüche,
mit einem ersten Steckachsenende (81, 91) und einem zweiten Steckachsenende (82, 92), wobei die Steckachse (80, 90) im Bereich des zweiten Endes (82, 92) ein Außengewinde (83, 93) und eine Zentrieroberfläche (87, 97) zur direkten Zentrierung des Basiselements (20) auf der Steckachse (80, 90) aufweist.

21. Eine Anordnung bestehend aus einer Steckachse nach dem vorhergehenden Anspruch und einem hinteren Schaltwerk nach einem der vorhergehenden Ansprüche,
wobei im eingeschraubten Zustand die Zentrieroberfläche (87, 97) der Steckachse (80, 90) mit einer ersten Zentrieröffnung (23a) des Basiselements (20) zur direkten Zentrierung des Basiselements (20) auf der Steckachse (80, 90) zusammenwirkt.

## Claims

1. Rear gearshift mechanism (10) for coaxial installation on a rear-wheel axle (A), having
- a base element (20),
- a pivot mechanism (30),
- a movable element (40), and
- a chain guide arrangement (50),
wherein the pivot mechanism (30) connects the base element (20) to the movable element (40), and the chain guide arrangement (50) is connected to the movable element (40) in a manner rotatable about a rotary axle (P), and
wherein the base element (20) comprises a first attachment end (21) for direct coaxial installation on the rear-wheel axle (A) and a second attachment end (29) for direct coupling to the pivot mechanism (30),
wherein the first attachment end (21) has a first arm (22a) and a second arm (22b), which are arranged spaced apart from one another in an axial direction, and, in the installed state, the first arm (22a) is situated on an axial inner side of a frame (1) and the second arm (22b) is situated on an axial outer side of the frame (1),
**characterized in that**
the first arm (22a) has a first centring opening (23a) and the second arm (22b) has a second centring opening (23b).

2. Rear gearshift mechanism (10) according to Claim 1, wherein the first arm (22a) has on its axial outer side an adaptor stop surface (25).

3. Rear gearshift mechanism (10) according to either of the preceding claims,
wherein the first arm (22a) has on its axial inner side a hub stop surface (26).

4. Rear gearshift mechanism (10) according to one of the preceding claims,
wherein the first arm (22a) has on its axial inner side a hub guide (27).

5. Rear gearshift mechanism (10) according to one of the preceding claims,
wherein the first arm (22a) has an axle opening (28) for passing-through of an axle, in particular of a plug-in axle (70, 80, 90).

6. Rear gearshift mechanism (10) according to one of the preceding claims,
wherein the base element (20) has a first receptacle (29a) for a first pivot axle (31) of the pivot mechanism (30) and has a second receptacle (29b) for a second pivot axle (32) of the pivot mechanism, and wherein the first and second receptacles (29a, 29b) are each oriented orthogonally to the rear-wheel axle (A).

7. Rear gearshift mechanism (10) according to one of the preceding claims,
having an adaptor (60) which comprises a screw connection, in particular a bolt (61) with an external thread (64) and a nut (66) with an internal thread (67).

8. Rear gearshift mechanism (10) according to Claim 7, wherein the adaptor (60), in particular the bolt (61), has an axle opening in which there is arranged an internal thread (65) into which a counterpart thread (73, 83, 93) of the plug-in axle (7, 70, 80, 90) is able to be screwed.

9. Rear gearshift mechanism (10) according to either of Claims 7 and 8,
wherein a first external diameter of the adaptor (60) is coordinated with an internal diameter of the first centring opening (23a) of the base element (20), and a second external diameter of the adaptor (60) is coordinated with an internal diameter of the second centring opening (23b) of the base element (20) .

10. Rear gearshift mechanism (10) according to Claim 9, wherein an external diameter of a bolt foot (63c) is coordinated with the first centring opening (23a) and an external diameter of a bolt head (62) is coordinated with the second centring opening (23b).

11. Rear gearshift mechanism (10) according to one of Claims 7 to 9,
wherein the adaptor (60), in particular an axial stop surface (63d, 63d') of the bolt (61), bears against the axial adaptor stop surface (25) of the base element (20).

12. Rear gearshift mechanism (10) according to Claim 3 and one of the preceding claims,
**characterized**
**in that** the base element (20), in particular the hub stop surface (26) of the first arm (22a), abuts in the operationally ready state axially against a hub end cap (4).

13. Rear gearshift mechanism (10) according to Claim 12, wherein the first arm (22a) is arranged between the hub end cap (4) and the adaptor (60), in particular is fixed in a force-fitting manner between the hub end cap (4) and the adaptor (60).

14. Rear gearshift mechanism (10) according to one of the preceding claims,
**characterized**
**in that** the pivot mechanism (30) comprises at least one pivot axle (31, 32, 33, 34) which is oriented orthogonally to the rear-wheel axle (A).

15. Rear gearshift mechanism (10) according to Claim 14, wherein the pivot mechanism (30) is formed as a four-joint parallelogram with four pivot axles (31, 32, 33, 34), and all four pivot axles (31, 32, 33, 34) are oriented orthogonally to the rear-wheel axle (A) .

16. Rear gearshift mechanism (10) according to one of the preceding claims,
wherein the gearshift mechanism (10), in particular the movable element (40), has an arresting element (42) which makes it possible for the preloaded chain guide arrangement (50) to be fixed in relation to the movable element (40) for the purpose of setting the gearshift mechanism (10).

17. Rear gearshift mechanism (10) according to one of preceding Claims 1 to 8 or 11 to 16,
wherein the first attachment end (21) of the base element (20) has a first centring opening (23a) which is configured to interact in the operationally ready state with a centring surface (87, 97) of the plug-in axle (80, 90) for the purpose of centring the base element (20) on the plug-in axle (80, 90).

18. Rear gearshift mechanism (10) according to one of the preceding claims,
wherein, on the movable element (40) or on the chain guide arrangement (50), there is arranged an inner limit stop (59a) which is configured to interact, in an inner maximum position of the gearshift mechanism (10), with a pinion assembly (R) in order to limit an axial movement of the gearshift mechanism (10) in an inward direction.

19. Rear gearshift mechanism (10) according to one of the preceding claims,
wherein, on the chain guide arrangement (50), there is arranged an outer limit stop (59b) which is configured to interact, in an outer maximum position of the gearshift mechanism (10), with the base element (20) in order to limit an axial movement of the gearshift mechanism (10) in an outward direction.

20. Arrangement consisting of a plug-in axle and a rear gearshift mechanism according to one of the preceding claims, wherein the plug-in axle (80, 90) for screwing into a rear gearshift mechanism (10) according to one of the preceding claims, having a first plug-in axle end (81, 91) and a second plug-in axle end (82, 92), wherein, in the region of the second end (82, 92), the plug-in axle (80, 90) has an external thread (83, 93) and a centring surface (87, 97) for the purpose of directly centring the base element (20) on the plug-in axle (80, 90).

21. Arrangement consisting of a plug-in axle according to the preceding claim and a rear gearshift mechanism according to one of the preceding claims, wherein, in the screwed-in state, the centring surface (87, 97) of the plug-in axle (80, 90) interacts with a first centring opening (23a) of the base element (20) for the purpose of directly centring the base element (20) on the plug-in axle (80, 90).

## Revendications

1. Dérailleur arrière (10) pour le montage coaxial sur un axe de roue arrière (A), présentant :
- un élément de base (20),
- un mécanisme de pivotement (30),
- un élément mobile (40), et
- un agencement de guidage de chaîne (50),
le mécanisme de pivotement (30) reliant l'élément de base (20) à l'élément mobile (40), et l'agencement de guidage de chaîne (50) étant relié à l'élément mobile (40) de manière rotative autour d'un axe de rotation (P), et
l'élément de base (20) comprenant une première extrémité de raccordement (21) pour le montage coaxial direct sur l'axe de roue arrière (A) et une deuxième extrémité de raccordement (29) pour le couplage direct au mécanisme de pivotement (30),
la première extrémité de raccordement (21) présentant un premier bras (22a) et un deuxième bras (22b), qui sont agencés espacés l'un de l'autre dans la direction axiale, et, à l'état monté, le premier bras (22a) se trouvant sur un côté intérieur axial d'un cadre (1) et le deuxième bras (22b) sur un côté extérieur axial du cadre (1), **caractérisé en ce que**
le premier bras (22a) présente une première ouverture de centrage (23a) et le deuxième bras (22b) présente une deuxième ouverture de centrage (23b).

2. Dérailleur arrière (10) selon la revendication 1, dans lequel le premier bras (22a) présente une surface de butée d'adaptateur (25) sur son côté extérieur axial.

3. Dérailleur arrière (10) selon l'une quelconque des revendications précédentes,
dans lequel le premier bras (22a) présente une surface de butée de moyeu (26) sur son côté intérieur axial.

4. Dérailleur arrière (10) selon l'une quelconque des revendications précédentes,
dans lequel le premier bras (22a) présente un guidage de moyeu (27) sur son côté intérieur axial.

5. Dérailleur arrière (10) selon l'une quelconque des revendications précédentes,
dans lequel le premier bras (22a) présente une ouverture d'axe (28) pour le passage d'un axe, notamment d'un axe enfichable (70, 80, 90).

6. Dérailleur arrière (10) selon l'une quelconque des revendications précédentes,
dans lequel l'élément de base (20) présente un premier logement (29a) pour un premier axe de pivotement (31) du mécanisme de pivotement (30) et un deuxième logement (29b) pour un deuxième axe de pivotement (32) du mécanisme de pivotement, et dans lequel les premier et deuxième logements (29a, 29b) sont chacun orientés orthogonalement à l'axe de roue arrière (A).

7. Dérailleur arrière (10) selon l'une quelconque des revendications précédentes, présentant un adaptateur (60) qui comprend une liaison vissée, notamment un boulon (61) avec un filetage extérieur (64) et un écrou (66) avec un filetage inférieur (67).

8. Dérailleur arrière (10) selon la revendication 7, dans lequel l'adaptateur (60), notamment le boulon (61), présente une ouverture d'axe dans laquelle est agencé un filetage intérieur (65) dans lequel peut être vissé un contre-filetage (73, 83, 93) de l'axe enfichable (7, 70, 80, 90).

9. Dérailleur arrière (10) selon l'une quelconque des revendications 7 ou 8,
dans lequel un premier diamètre extérieur de l'adaptateur (60) est adapté à un diamètre intérieur de la première ouverture de centrage (23a) de l'élément de base (20) et un deuxième diamètre extérieur de l'adaptateur (60) est adapté à un diamètre intérieur de la deuxième ouverture de centrage (23b) de l'élément de base (20).

10. Dérailleur arrière (10) selon la revendication 9, dans lequel un diamètre extérieur d'un pied de boulon (63c) est adapté à la première ouverture de centrage (23a) et un diamètre extérieur d'une tête de boulon (62) est adapté à la deuxième ouverture de centrage (23b).

11. Dérailleur arrière (10) selon l'une quelconque des revendications 7 à 9,
dans lequel l'adaptateur (60), notamment une surface de butée axiale (63d, 63d') du boulon (61), s'applique sur la surface de butée d'adaptateur axiale (25) de l'élément de base (20).

12. Dérailleur arrière (10) selon la revendication 3 et l'une quelconque des revendications précédentes, **caractérisé en ce que**
l'élément de base (20), notamment la surface de butée de moyeu (26) du premier bras (22a), bute axialement contre un capuchon d'extrémité de moyeu (4) à l'état en ordre de marche.

13. Dérailleur arrière (10) selon la revendication 12, dans lequel le premier bras (22a) est agencé entre le capuchon d'extrémité de moyeu (4) et l'adaptateur (60), notamment est fixé par adhérence entre le capuchon d'extrémité de moyeu (4) et l'adaptateur (60).

14. Dérailleur arrière (10) selon l'une quelconque des revendications précédentes,
**caractérisé en ce que**
le mécanisme de pivotement (30) comprend au moins un axe de pivotement (31, 32, 33, 34), qui est orienté orthogonalement à l'axe de roue arrière (A).

15. Dérailleur arrière (10) selon la revendication 14, dans lequel le mécanisme de pivotement (30) est configuré sous forme de quadrilatère à parallélogramme avec quatre axes de pivotement (31, 32, 33, 34), et les quatre axes de pivotement (31, 32, 33, 34) sont tous orientés orthogonalement à l'axe de roue arrière (A).

16. Dérailleur arrière (10) selon l'une quelconque des revendications précédentes, dans lequel le dérailleur (10), notamment l'élément mobile (40), présente un élément d'arrêt (42) qui permet de bloquer l'agencement de guidage de chaîne précontraint (50) pour régler le dérailleur (10) par rapport à l'élément mobile (40).

17. Dérailleur arrière (10) selon l'une quelconque des revendications 1 à 8 ou 11 à 16 précédentes,
dans lequel la première extrémité de raccordement (21) de l'élément de base (20) présente une première ouverture de centrage (23a) qui est configurée pour coopérer, à l'état en ordre de marche, avec une surface de centrage (87, 97) de l'axe enfichable (80, 90) pour le centrage de l'élément de base (20) sur l'axe enfichable (80, 90).

18. Dérailleur arrière (10) selon l'une quelconque des revendications précédentes,
dans lequel une butée de limitation intérieure (59a) est agencée sur l'élément mobile (40) ou sur l'agencement de guidage de chaîne (50), laquelle est configurée pour coopérer avec un paquet de pignons (R) dans une position intérieure maximale du dérailleur (10) afin de limiter un mouvement axial du dérailleur (10) vers l'intérieur.

19. Dérailleur arrière (10) selon l'une quelconque des revendications précédentes,
dans lequel une butée de limitation extérieure (59b) est agencée sur l'agencement de guidage de chaîne (50), laquelle est configurée pour coopérer avec l'élément de base (20) dans une position extérieure maximale du dérailleur (10) afin de limiter un mouvement axial du dérailleur (10) vers l'extérieur.

20. Agencement constitué d'un axe enfichable et d'un dérailleur arrière selon l'une quelconque des revendications précédentes, dans lequel l'axe enfichable (80, 90) destiné à être vissé dans un dérailleur arrière (10) selon l'une quelconque des revendications précédentes, avec une première extrémité d'axe enfichable (81, 91) et une deuxième extrémité d'axe enfichable (82, 92), l'axe enfichable (80, 90) présentant dans la zone de la deuxième extrémité (82, 92) un filetage extérieur (83, 93) et une surface de centrage (87, 97) pour le centrage direct de l'élément de base (20) sur l'axe enfichable (80, 90).

21. Agencement constitué d'un axe enfichable selon la revendication précédente et d'un dérailleur arrière selon l'une quelconque des revendications précédentes, dans lequel, à l'état vissé, la surface de centrage (87, 97) de l'axe enfichable (80, 90) coopère avec une première ouverture de centrage (23a) de l'élément de base (20) pour le centrage direct de l'élément de base (20) sur l'axe enfichable (80, 90).
